## Europäisches Patentamt
## European Patent Office
## Office européen des brevets

(19)

(11) Veröffentlichungsnummer: **0 000 707**
**B1**

(12) **EUROPÄISCHE PATENTSCHRIFT**

(45) Veröffentlichungstag der Patentschrift: **14.10.81**

(21) Anmeldenummer: **78100388.4**

(22) Anmeldetag: **13.07.78**

(51) Int. Cl.³: **C 01 B 17/86, B 01 D 53/34**

(54) **Verfahren und Anlage zum Abtrennen von Schwefeldioxyd aus Gasströmen unter Gewinnung von Schwefelsäure nach dem Stickoxyd-Verfahren.**

(30) Priorität: **21.07.77 CH 9062/77**

(43) Veröffentlichungstag der Anmeldung:
**21.02.79 Patentblatt 79/4**

(45) Bekanntmachung des Hinweises auf die Patenterteilung:
**14.10.81 Patentblatt 81/41**

(84) Benannte Vertragsstaaten:
**BE CH FR GB LU NL SE**

(56) Entgegenhaltungen:
**DE - C - 467 587**
**FR - A - 911 236**
**FR - A - 2 032 512**
**FR - A - 2 303 760**
**GB - A - 270 988**
**US - A - 1 822 447**

(73) Patentinhaber: **CIBA-GEIGY AG**
**Patentabteilung Postfach**
**CH-4002 Basel (CH)**

(72) Erfinder: **Fattinger, Volker, Dr.**
**Im Lee 39**
**CH-4144 Arlesheim (CH)**

# 0 000 707

Verfahren und Anlage zum Abtrennen von Schwefeldioxyd aus Gasströmen unter Gewinnung von Schwefelsäure nach dem Stickoxyd-Verfahren

Die Erfindung betrifft ein Verfahren zum Abtrennen von $SO_2$ aus einem mindestens 5 g Wasser/m³ enthaltenden Gasstrom, der das $SO_2$ mindestens zeitweilig in zum Ablassen in die Umgebungsluft unzulässig hoher Konzentration enthält, unter Gewinnung von Schwefelsäure nach dem Stickoxid-verfahren in einem zur Erzeugung einer starken Schwefelsäure von über 70 Gewichts-% $H_2SO_4$ geeigneten System von Reaktionszonen, wobei das $SO_2$-haltige Gas (mit einem zur Durchführung des Stickoxidverfahrens geeigneten Sauerstoffgehalt) unter einem zum Durchleiten des Gases durch das System ausreichenden Ueberdruck nacheinander

(a) durch eine Vorbehandlungszone;

(b) durch eine Denitrierungszone;

(c) durch eine $SO_2$-Verarbeitungszone,

in welcher es im intimen Kontakt mit im Kreislauf durch diese Zone geführter verdünnter Schwefelsäure mit einem Gehalt von weniger als 70 Gew.-% $H_2SO_4$ (Dünnsäure) gebracht wird, wobei die Verweilzeit des $SO_2$ und Stickoxide enthaltenden Gases zwischen dem Austritt aus der Denitrierungszone und dem Eintritt in den ersten Turm der Stickoxid-Absorptionszone bei Konzentrationen von mindestens 5 Vol.-% $SO_2$ und mindestens 10 Vol.-% $O_2$ im Eintrittsgas in die Denitrierungszone kürzer als 30 Sekunden gehalten wird, während bei kleineren $SO_2$-Gehalten oder kleineren $O_2$-Gehalten im ge-nannten Eintrittsgas die obere Grenze der Verweilzeit sich nach der Formel

$$Z_{max} = \frac{1500}{[SO_2] \, [O_2]}$$

errechnet, worin $Z_{max}$ die Verweilzeit in Sekunden, $[SO_2]$ den Gehalt an $SO_2$ im Eintrittsgas in die Denitrierungszone in Vol.-% und $[O_2]$ den Gehalt an $O_2$ im gleichen Eintrittsgas, ebenfalls in Vol-%, bedeuten; und

(d) durch eine Stickoxid-Absorptionszone geleitet wird, wobei mindestens ein Teil der nitrosehaltigen, aus der Absorptionszone abfliessenden Schwefelsäure indirekt auf eine Temperatur über 60°C erhitzt und unter Umgebung der $SO_2$-Verarbeitungszone direkt in die Denitrationszone eingeleitet wird, in welcher Stickoxide aus dieser Säure in den Gasstrom überführt werden, wodurch aus der Denitrierzone abfliessende, von Nitrose praktisch freie Säure mit einem Gehalt von über 70 Gewichts-% $H_2SO_4$ aus dem System entnommen werden kann; und ein Teil der letztgennanten Säure wieder durch die Absorptionszone zirkuliert und dort Stickoxide aus dem Gasstrom absorbiert; wobei weiter

($\alpha$) ein Teil der genannten Dünnsäure aus dem Kreislauf durch die $SO_2$-Verarbeitungszone ent-nommen und in der Vorbehandlungszone in Kontakt mit dem feuchten $SO_2$-haltigen Gasstrom gebracht wird,

($\beta$) ein erster Teil der aus der Vorbehandlungszone abfliessenden, durch Feuchtigkeit aus dem Gas stärker verdünnten von in den Gasstrom abgebarren Stickoxiden praktisch freien Dünnsäure unter Umgehung der Denitrierungszone direkt in den Kreislauf der $SO_2$-Verarbeitungszone zurückgeführt wird; und

($\gamma$) ein anderer Teil der aus der genannten Vorbehandlungszone abfliessenden Dünnsäure in eine Säureentwässerungszone geleitet wird, in welcher Wasser aus der Dünnsäure verdampft wird, worauf die entstehende höher konzentrierte Dünnsäure wieder in den Dünnsäurekreislauf zurückgeführt wird.

Ein solches Verfahren ist bereits aus der DT-OS 26 09 505, offengelegt am 30.9.76 bekannt.

Die Erfindung betrifft weiter eine verbesserte Anlage zur Durchführung des erfindungsgemässen Verfahrens, die von der in der oben genannten DT-OS 26 09 505 beschriebenen ausgeht.

Im Zuge der Bemühungen zur Reinhaltung der Luft ist das Abtrennen von $SO_2$ aus Abgasströmen ein dringendes Problem. Es sind vielseitige Bemühungen im Gange, um das aus den Abgasen ab-getrennte $SO_2$ in verwertbarer Form zu gewinnen. z.B. als Schwefel oder Schwefelsäure. Die Kosten der Schwefelsäure-Gewinnung liegen bei niedrigen $SO_2$-Konzentrationen jedoch sehr hoch. Das Schwefelsäure-Kontaktverfahren erfordert zur Vermeidung einer zu raschen Vergiftung des Katalysators eine weitgehende Gasreinigung, die ein Abkühlen der Gase notwendig macht. Das Anwärmen der Gase auf die Anspringtemperatur des Katalysators und die Gastrocknung vor dem Katalysator verursachen hohe Kosten. Aus diesem Grunde wurde versucht, die Schwefelsäure-Bildung bei tieferer Temperatur durch Anwendung von Aktivkohle oder durch katalytisch wirksame, gelöste Metallsalze (z.B. Mangan) herbeizuführen. Es resultieren aber relativ teure, komplizierte Verfahren, wenn man reine Säure von mehr als 40% $H_2SO_4$ erzeugt.

Wie viele andere, bekannte Stickoxid-Schwefelsäure-Verfahren arbeitet auch das erfindungsgemässe Verfahren in der Denitrier- und in der Absorptionszone mit Schwefelsäure von 70—85 Gew.-% $H_2SO_4$, vorzugsweise mit einer Säure zwischen 72 und 80 Gew.-% $H_2SO_4$ (Absorptionssäure).

Bei dem eingangs beschriebenen bekannten Verfahren der DE-OS 26 09 505 muss bei sehr nie-drigen $SO_2$-Gehalten der zu verarbeitenden Gase Wärmeenergie in das System eingebracht werden.

2

**0 000 707**

Die Grenzen der besten bekannten Stickoxid-Verfahren ergeben sich in erster Linie aus der Wasserbilanz der Anlage, weil bei der Schwefelsäure-Gewinnung zwangsläufig auch Wasser aus dem Gas absorbiert wird. Damit die gewonnene Schwefelsäure in eisernen Tanks gelagert werden kann, soll nämlich ihr Gehalt möglichst über 65 Gew.-% $H_2SO_4$ liegen, sie darf also nicht zur stark verdünnt werden.

Schwefelsäure, die nach dieser Art von Verfahren hergestellt wird, soll daher eine "starke" Säure mit einem Gehalt von über 70 Gewichts-%, vorzugsweise aber über 72 Gewichtsprozent $H_2SO_4$ sein.

Wenn ein Gas mehr Wasserdampf enthält, als zur Bildung einer Säure mit zur Stickoxidabsorption genügender Konzentration verbraucht wird, so behindert dies den Betrieb eines Stickoxid- Schwefelsäure Verfahrens; die Volumen der Reaktionsräume müssen gross sein.

Die bekannten Stickoxid-Schwefelsäure-Verfahren liefern bei der Verarbeitung von feuchten Gasen mit einem $SO_2$-Gehalt von weniger als 6 vol-% und bei Temperaturen unter 60°C täglich je m³ Reaktionsraum nur begrenzte Mengen an hinreichend konzentrierter Schwefelsäure. Moderne Petersen-Turmanlagen produzieren bei der Verarbeitung von Gasen mit 4 bis 6 Vol-% $SO_2$ weniger als 150 kg einer Schwefelsäure mit 78 Gew.-% $H_2SO_4$-Gehalt (Gloversäure) je m³ Füllraum pro Tag. Nur bei konzentrierteren Gasen werden höhere Raum-Zeit-Ausbeuten erreicht.

Abgase mit der obengenannten geringen Konzentration an $SO_2$ entstehen z.B. in Anlagen der metallurgischen Industrie. Rauchgase von Kraftwerken, die Oel oder Kohle verbrennen, enthalten einige Gramm, z.B. 2 bis 4 g $SO_2/Nm^3$ (1 $Nm^3$ = 1 m³ bei 1 at und 0° C). Bei der Anwendung bekannter Anreicherungsverfahren. z.B. demjenigen nach US—PS 3 721 066, auf Gase mit derart niedrigem $SO_2$-Gehalt entstehen beim Regenerieren der festen oder flüssigen Sorptionsmittel Gase, die $SO_2$ in wechselnden Mengen mit Konzentrationen von oft nur wenigen Volumenprozenten enthalten und relativ hohen Wassergehalt aufweisen.

Als "relativ hoher" Wassergehalt ist dabei ein solcher zu betrachten, der 50% des Gewichts des je m³ im Gas enthaltenen $SO_2$ überschreitet, also z.B. bei Anwesenheit von 100 g $SO_2/m^3$ über 50 g $H_2O/m^3$ beträgt.

Auch beim Spalten von Abfallschwefelsäure entstehen Abgase mit relativ niedrigem $SO_2$-Gehalt (z.B. von 50 bis 150 g/m³), weil ein beträchtlicher Anteil des Sauerstoffs durch den Brennstoff im Spaltofen verbraucht wird.

Die Erfindung löst nun das Problem, eine Konzentration von Stickoxiden in den gereinigten Abgasen sicherzustellen, die unterhalb der noch zulässigen Hochstkonzentration liegt, bei welcher ein Ablassen der Abgase in die Umgebungsluft gestattet ist. Ein weiteres Ziel der Erfindung liegt darin, das eingangs beschriebene Verfahren so zu verbessern, bei der Verarbeitung von $SO_2$-haltigen Gasen insbesondere auch solchen niedriger $SO_2$-Konzentration, unter 6 Vol-% $SO_2$, die Raum-Zeit-Ausbeute an 78%-iger Schwefelsäure wesentlich, vorzugsweise auf über das doppelte der bisher erreichbaren zu steigern, dabei vorzugsweise das bisher bei dem Verfahren nach der DE—OS 26 09 505 noch erforderliche Volumen der Reaktionsräume weiter zu verkleinern, und diese Verbesserungen weitgehend unabhängig vom Wassergehalt der Eintrittsgase zu erreichen.

Ein weiteres Ziel der Erfindung ist es, die Summe der Volumina der Füllräume der als Behandlungszonen dienenden Reaktionsapparate so niedrig wie möglich zu halten. Weiter setzt sich die Erfindung zum Ziel, den Wärmebedarf des genannten Systems zu senken.

Diese Probleme werden gelöst und die genannten Ziele werden erfindungsgemäss erreicht durch das eingangs beschriebene Verfahren zum Abtrennen von $SO_2$ aus einem Gasstrom, welches dadurch gekennzeichnet ist, dass

($\delta$) in die Vorbehandlungszone eine Stickstoff-Sauerstoff-Verbindung (wie weiter unten näher definiert) in solcher Menge eingeführt wird, dass beim Kontakt des $SO_2$-haltigen Gasstromes mit Dünnsäure in dieser Zone der Gehalt der Stickstoff-Sauerstoff-Verbindung in derselben stets mindestens 0,8 g Stickstoff (in Gestalt der besagten Verbindung) je Mol im zu behandelnden Gasstrom enthaltenen $SO_2$ entspricht, wobei jedoch der Gehalt an Stickstoff-Sauerstoff-Verbindung, der in die Vorbehandlungszone eingeführt wird, höchstens 11,2 g Stickstoff je Mol $SO_2$ des Gasstroms entspricht.

Der Feuchtigkeitsgehalt der Gase bei ihrem Eintritt in das aus den eingangs genannten Reaktionszonen bestehende System, wie es in der DE—OS 26 09 505 beschrieben ist, beträgt mindestens 5 g $H_2O$ je m³ Gas. $SO_2$-haltige Gase mit geringerem Feuchtigkeitsgehalt, insbesondere trockene Gase, wie sie aus der Produktion von Schwefelsäure nach dem Kontaktverfahren anfallen, benötigen keine Behandlung nach dem Verfahren nach der Erfindung, insbesondere, wenn aus ihnen nur verdünnte Schwefelsäure hergestellt werden soll, wie z.B. bei dem in der US—PS 1.822.447 (H.R. Merriam) im Jahre 1931 beschriebenen Verfahren.

Das in das erfinderische System eintretende Gas kann zeitweise nur Spuren von $SO_2$, dann aber wieder von Zeit zu Zeit einige, z.B. 2 bis 5, Volumen-% an $SO_2$ enthalten.

Enthält hingegen ein $SO_2$-haltiger Gasstrom 8 Gewichts-% oder mehr an $SO_2$, so ist es wirtschaftlicher, seiner $SO_2$-Gehalt durch katalytische Oxidation zu $SO_3$ mittels des Kontaktverfahrens zu entfernen.

Das verbesserte System von Reaktionszonen, in welchem das Verfahren nach der Erfindung durchgeführt wird, kann mit einem $SO_2$-haltigen Gas beschickt werden, welches ein Abgas bekannter Art, z.B. Kamingas oder ein Röstgas, sein kann, wie sie bei der Verbrennung von Brennstoffen mit nie-

3

**0 000 707**

drigem Schwefelgehalt oder beim Abrösten von schwefelhaltigen Erzen, z.B. bei der Gewinnung von Kupfer, oder bei anderen industriellen Prozessen anfallen, insbesondere auch ein Gas, welches bei der Vorkonzentrierung von Abgasen zur Erhöhung ihres Schwefelgehaltes anfällt. Solche Gase enthalten gewöhnlich zwischen 0,4 und 5 Volumen-% an Schwefel in Form von $SO_2$, also für das Kontaktverfahren ungenügende Mengen an $SO_2$.

Abgase, welche im System nach der Erfindung verarbeitet werden, sollten vorzugsweise einen $SO_2$-Gehalt von mindestens 0,2 Volumen-% aufweisen.

Der Gasstrom wird durch das gesamte System der Reaktionszonen im erfindungsgemässen Verfahren durch einen von einem entweder am Eintrittsende des Systems oder, vorzugsweise, nach dem Austrittsende desselben zu gelegenen Gebläse befördert, welches einen geringen Ueberdruck bzw. einen leichten Ansaugdruck in den Gasleitungen des Systems erzeugt. Etwa 0.01 bis 0.1 atü genügen für den Transport des zu behandelnden Gases durch das System. Jedenfalls ist der praktisch angewandte Druck nicht genügend, um eine Drucksynthese von der Art der in der US—PS 2 184 707 von E. Berl beschriebenen durchzuführen, welche eine Ueberdruck von mindestens 3, praktisch aber 10 bis 50 atü verlangt.

"Stickstoff-Sauerstoff-Verbindungen" sind diejenigen Verbindungen, welche im Stickoxidverfahren normalerweise auftreten oder verwendet werden, also NO, $NO_2$, $N_2O_3$, Nitrose oder Salpetersäure und gegebenenfalls auch feste "Kammerkristalle." Salpetrige Säure wird im Stickoxidverfahren sofort zu Salpetersäure oxidiert oder gibt $N_2O_3$ ab oder bildet mit Schwefelsäure Nitrose.

Gasförmige Substanzen, die an Sauerstoff gebundenen Stickstoff enthalten, sind also NO- oder $NO_2$- bzw. $N_2O_3$-haltige Gase, flüssige Substanzen sind insbesondere Salpetersäure selbst oder nitrosehaltige Schwefelsäure.

Die Stickstoff-Sauerstoff-Verbindung wird vorzugsweise in Form von zur Vorbehandlungszone fliessender nitrosehaltiger Dünnsäure, die aus der $SO_2$-Verarbeitungszone stammt, eingeführt. Auch kann in die zur Vorbehandlungszone fliessende Dünnsäure Salpetersäure eingeleitet werden, um den Gehalt an Stickstoff-Sauerstoff-Verbindung darin zu erzeugen oder zu erhöhen. Die Konzentration des Stickstoffs, welcher in an Sauerstoff gebundener Form in die Vorbehandlungszone gebracht wird, sollte pro Mol $SO_2$ des Gasstromes nicht höher liegen als eine 11,2 g Stickstoff entsprechende Menge an Stickstoff-Sauerstoff-Verbindung.

Vorzugsweise sind die Säureentwässerungszone und die Vorbehandlungszone in einem Dünnsäurekreislauf hintereinander geschaltet. Dabei fließt die Dünnsäure aus der Säureentwässerungszone vorteilhaft über einen Gas-Flüssigkeitsverschluss direkt in die Vorbehandlungszone.

Aus der Vorbehandlungszone austretende Dünnsäure kann in der Säureentwässerungszone mit den Abgasen aus der Stickoxid-Absorptionszone in Kontakt gebracht und die resultierende Schwefelsäure mit von ihr aus den Abgasen aufgenommenem Stickoxid und etwas erhöhtem $H_2SO_4$-Gehalt direkt in die Vorbehandlungszone wieder eingeleitet werden.

Die $H_2SO_4$-Konzentration der in der Vorbehandlungszone mit dem $SO_2$-haltigen Gasstrom in Kontakt tretenden Säure wird vorzugsweise niedriger gehalten als die $H_2SO_4$-Konzentration der Säure in der $SO_2$-Verarbeitungszone.

Das erfindungsgemäße Verfahren gestattet es, mit weniger als 100 m³ Füllraum je Nm³/sec zu reinigendem $SO_2$- Gas auszukommen und dabei außerdem den Wärmebedarf des Systems zu senken.

Die Anwesenheit von Stickstoff-Sauerstoff-Verbindungen in der Vorbehandlungszone bewirkt in dieser Zone eine unerwartet starke chemische Reaktion, was z.B. an einem Anstieg der Säure-Austrittstemperatur erkannt wird, der erfolgt, sobald mit dem Zusatz der Stickstoff-Sauerstoff-Verbindung begonnen wird. Die Stickstoff-Sauerstoff-Verbindungen können z.B. in Form von nitrosehaltiger Schwefelsäure in die Vorbehandlungszone gebracht werden.

Andererseits ist es auch möglich Salpetersäure oder stickoxidhaltige Gase, welche aus einer katalytischen Ammoniak-Verbrennung stammen, in die Vorbehandlungszone einzubringen. Dank der niedrigen Konzentration der Schwefelsäure in der Vorbehandlungszone und wegen der Anwesenheit von $SO_2$ in derselben wird von der Schwefelsäure keine Nitrose in der Vorbehandlungszone aufgenommen; im Gegenteil, nitrosehaltige Schwefelsäure, welche in die Vorbehandlungszone gegeben wird, verliert ihren Stickoxidgehalt rasch durch Abgabe von gasförmigen Stickoxiden.

Im Anschluss an die Vorbehandlung gelangt der Gasstrom in die Denitrierungszone. Es wurde gefunden, daß die Vorbelastung des Gases mit Stickoxiden die Denitrierung nicht merklich behindert, solange die in der Vorbehandlungszone vorhandene Menge an Stickstoff-Sauerstoff-Verbindung den weiter oben erwähnten, 11,2 g Stickstoff entsprechenden Betrag je Mol $SO_2$ des Gasstromes nicht überschreitet.

Durch den erfindungsgemäßen Einsatz von Stickstoff-Sauerstoff-Verbindungen in der Vorbehandlungszone wird das Gesamtsystem wesentlich intensiviert und es ist bei der Verarbeitung von ca. 1 Gew.-% $SO_2$ enthaltenden Gasen nicht notwendig, an irgendeiner Stelle des Systems Temperaturen über 65°C einzuhalten. Die höchste Säuretemperatur wird für die Berieselung der Denitrierungszone benötigt. Es genügt jedoch, die hierfür verwendete Säure in einem Wärmeaustauscher auf eine Temperatur von 65°C anzuwärmen, um eine genügende Denitrierung und eine restlose $SO_2$-Verarbeitung im Gesamtsystem sicherzustellen. Das Arbeiten bei relativ tiefen Temperaturen bedeutet ein Einsparen an Wärmeenergie und hat außerdem den wesentlichen Vorteil, daß

4

vergleichsweise billige Werkstoffe Verwendung finden können.

Schwefelsäure-Anlagen nach der Erfindung können z.B. aus PVC oder aus PVC-beschichtetem Material gefertigt werden. Es ist möglich, ein System, welches vollständig aus Kunststoff besteht, zu erstellen, wodurch eine sehr reine Säure produziert werden kann.

Besondere Vorteile bietet das erfindungsgemäße Verfahren bei der Verarbeitung von relativ schwach $SO_2$-haltigen Gasen, insbesondere bei solchen, deren $SO_2$-Konzentration zwischen 0,2 und 8 Vol.-%, vorzugsweise zwischen 0,5 und 6 Vol.-% liegt. Bei $SO_2$-Gehalten im Gasstrom, die über 8% liegen, lohnt sich die Weiterverarbeitung nach dem Schwefelsäure-Kontaktverfahren, welches bei solch hohen $SO_2$-Gehalten billiger arbeitet als das Stickoxid-Verfahren.

Gemäß der Erfindung wird die Vorbehandlungszone zu einer Intensivierung der $SO_2$-Verarbeitung herangezogen. Bei feuchten $SO_2$-haltigen Gasen übernimmt die Vorbehandlungszone auch die Funktion der Gastrocknung.

Der Einsatz der Vorbehandlungszone als Gastrocknungseinrichtung macht das Verfahren besonders zum Verarbeiten von sehr feuchten $SO_2$-haltigen Gasen geeignet. Ein Ausgleich der Wasserbilanz des Systems gemäß der Erfindung ist besonders bei schwachen $SO_2$-Gehalten der zu verarbeitenden Gase wichtig. Unter schwach $SO_2$-haltigen Gasen werden solche unter einem Gehalt von 5 Vol.-% $SO_2$ verstanden. Dank der Erfindung ist es möglich, auch $SO_2$-haltige Gase aufzuarbeiten, deren Feuchtigkeitsgehalt oberhalb eines Molverhältnisses von $H_2O:SO_2$ von 2:1 liegt. Dies ist ein wesentlicher Vorteil des Verfahrens, weil die Entfernung von Feuchtigkeit aus großen Abgasströmen nur mit erheblichem Energie- und Kostenaufwand möglich ist.

Der Feuchtigkeitsgehalt der Gase, die in dem System nach der Erfindung verarbeitet werden können, kann bis zu 20 bis 60, oder noch mehr g $H_2O$ betragen.

Bei der Verarbeitung von feuchten $SO_2$-haltigen Gasen nimmt die Schwefelsäure in der Vorbehandlungszone Wasser aus dem Gasstrom auf. Gemäss einer Ausgestaltung der Erfindung wird die hierdurch verdünnte Schwefelsäure einem Gas-Flüssigkeits-Kontaktapparat zugeführt, welcher sich gasseitig am Ende des Systems befindet. Die Austrittsgase der Stickoxid-Absorptionszone sind trocken und daher dazu geeignet, der Dünnsäure Wasser zu entziehen.

Tatsächlich ist der Gehalt an Stickoxiden in der die Vorbehandlungszone verlassenden Säure so niedrig, dass in der Säureentwässerungszone unbedenklich die das System verlassenden trocknenen Abgase als Wasserentzugsmittel verwendet werden können. Sie können dann mit Wasserdampf beladen über den Kamin ins Freie abgegeben werden, da sie praktisch stickoxidfrei sind.

Würde hingegen als Säure in der Vorbehandlungszone eine solche mit einem Gehalt von 73% $H_2SO_4$ verwendet, wie dies in der US—PS 1 810 253 von Petersen vorgeschlagen wird, aus dessen Turm D diese Säure austritt, so würde sie in der Vorbehandlungszone so stark mit Nitrose beladen, dass beim Trocknen dieser Säure mit Abgas aus dem System die Abgase einen viel zu hohen umweltfeindlichen Stickoxidgehalt aufnehmen.

In der erfindungsgemässen Anlage werden hintereinandergeschaltete Gas-Flüssigkeits-Reaktionsapparate benutzt, von denen jeder einzelne von einem Gasstrom und von einem Säurestrom durchflossen wird. Zur Verwendung hierfür sind die verschiedensten, in der Verfahrenstechnik bekannten Reaktionsapparate wie Blasensäulen, Sprudelschichten und insbesondere auch Füllkörpertürme geeignet.

Für die $SO_2$-Verarbeitung wird im erfindungsgemässen Verfahren eine Säure von weniger als 70 Gew.-% verwendet; sie wird Dünnsäure genannt. In der alten Literatur entspricht diesem Begriff die Bezeichnung "Kammersäure". Die alte Bezeichnung "Glover-Turm" entspricht dem Begriff "Denitrierturm" und die alte Bezeichnung "Gay-Lussac-Turm" ist durch "Absorptionsturm" ersetzt. Bei der Denitrierung erfolgt zwangsweise bereits eine $SO_2$-Aufarbeitung unter Bildung von Schwefelsäure.

Bei der Beschreibung der Erfindung wurde im übrigen in der vorliegenden Anmeldung dieselbe Terminologie beibehalten, die schon bei der Beschreibung des Systems und der Verfahrenseinzelheiten in der DE—OS 26 09 505 verwendet wurde.

So wird im erfindungsgemässen Verfahren wie in demjenigen nach der DE—OS 26 09 505 in den Fülltürmen der $SO_2$-Verarbeitungszone bei einem Gehalt von weniger als 2 Vol-% $SO_2$ im Eintrittsgas in diese Zone mit einer Konzentration an gasförmigen Stickoxiden gearbeitet, die über 1 Vol-% liegt, bei Eintrittsgasen mit höherem $SO_2$-Gehalt sollte die Stickoxidkonzentration in der Gasphase über 2-Vol-.% liegen.

Auch bei dem Verfahren nach der Erfindung gelingt es, Gase mit einem $SO_2$-Gehalt im Bereich von weniger als 2 Vol-%, vorzugsweise von 1 bis 2 Vol-%, welche einen Wasserdampf-Gehalt entsprechend einer Sättigungstemperatur von mehr als 35°C aufweisen (36 g/m³ $H_2O$), bei Verwendung einer Stickoxidkonzentration von weniger als 0,2 Vol-% zu Schwefelsäure von über 75-Gew.-% aufzuarbeiten, indem man die feuchten $SO_2$-Gase im Trockenturm der der Denitrierzone vorgeschalteten Verarbeitungszone mit Dünnsäure in Kontakt bringt, wobei den Gasen ein Teil ihres Wasserdampf-Gehaltes entzogen wird und durch Austausch zwischen Säure aus dem Trockenturm und dem Dünnsäure-Producktionsturm Wasser der Eintrittsgase zur Schwefelsäurebildung ausgenutzt wird, ohne dass dieser Wasseranteil über den Gasweg in die Denitrierungszone gelangt.

Während bisher, wie weiter oben bereits erwähnt, die Verweilzeit der Gase zwischen $SO_2$-Verarbeitungszone und Stickoxidabsorptionszone z.B. durch Zwischenschaltung eines Regenierungsturmes verlängert wurde, wurde beim Verfahren nach der Erfindung ein anderer Weg als richtig erkannt, nämlich eine möglichst kurze Verweilzeit zwischen der Denitrierung und der Stickoxidabsorption, dafür aber der Einsatz von Füllkörpern mit genügender Oberfläche, sodass ein sehr intensiver Stoffaustausch zwischen Gas und Flüssigkeit herbeigeführt wird. Demnach wird erfindungsgemäss bei vermindertem Sauerstoffgehalt die Erhöhung der $NO_2$-Konzentration nicht durch Einsatz eines leeren Raumes herbeigeführt wie bei Petersen, sondern durch Vergrößern des mit Füllkörpern versehenen und mit Dünnsäure berieselten Reaktionsraumes. Im Gegensatz zu bekannten Systemen wird daher nach der Erfindung zwischen Denitrierung und Stickoxidabsorption jeder freie Raum, welcher nicht mit Füllkörpern gefüllt ist, soweit wie irgend möglich vermieden. Erst die Kombination der Maßnahmen der Erfindung macht es möglich, ein Turmsystem im geschilderten Umfang zu intensivieren, d.h. seine Ausbeute auch bei Verarbeitung von Gasen mit weniger als 6 Vol-% $SO_2$-Gehalt in solchem Maße zu steigern, daß eine tägliche Produktion von 300 kg 78%-iger Schwefelsäure je $m^3$ Füllraum und mehr erreicht werden kann. Bevorzugt wird dabei die Anlage zur Durchführung des erfindungsgemäßen Verfahrens so ausgelegt, bzw. dieses so gelenkt, daß der Reaktionsraum für die Stickoxid-Absorption mindestens gleich oder am besten größer ist als die Summe der Reaktionsräume für Denitrierung und $SO_2$-Verarbeitung. Andernfalls gehen Stickoxide für die Durchführung des Verfahrens verloren. Denn die Stickoxid-Absorption hängt in erster Linie vom Gasvolumen und nicht von der Konzentration der Stickoxide im Gas ab. Durch die obige Auslegung der Reaktionsräume kann die Gesamtanlage wesentlich kleiner gehalten werden, als die bekannten Anlagen für Verfahren der eingangs beschriebenen Art.

Die Verweilzeit des $SO_2$ und Stickoxide enthaltenden Gases zwischen dem Austritt aus der Denitrierungszone und dem Eintritt in den ersten Turm der Stickoxid-Absorptionszone wird bei Konzentrationen von mindestens 5 Vol.-% $SO_2$ und mindestens 10 Vol.-% $O_2$ im Eintrittsgas in die Denitrierungszone kürzer als 30 Sekunden gehalten, während sich bei kleineren $SO_2$-Gehalten oder kleineren $O_2$-Gehalten im genannten Eintrittsgas die obere Grenze der Verweilzeit nach der Formel

$$Z_{max} = \frac{1500}{[SO_2].[O_2]}$$

errechnet, wobei in der Formel $Z_{max}$ die Verweilzeit in Sekunden,
$[SO_2]$ den Gehalt an $SO_2$ im Eintrittsgas in die Denitrierungszone in Vol-% und
$[O_2]$ den Gehalt an Sauerstoff im gleichen Eintrittsgas, ebenfalls in Vol-% bedeuten.

Im nach dem erfindungsgemäßen Verfahren zu verarbeitenden Abgas bzw. dem Eintrittsgas in die Denitrierungszone sollte der Gehalt an $SO_2$ vorzugsweise nicht unter 0,2 Vol-% betragen.

Auch bei Gasen mit einem $SO_2$-Gehalt von mehr als 2 Vol-% ergibt ein Trockenturm Vorteile für den Betrieb des Systems, ist jedoch nicht unbedingt notwendig. Das Anwärmen der Nitrose-haltigen Säure, welche in den Denitrierturm geleitet wird, der gasseitig vor den ersten, mit Dünnsäure berieselten Turm geschaltet is, auf über 60°C erlaubt eine drastische Verminderung des Reaktionsraumes zur $SO_2$-Verarbeitung durch eine Kombination der folgenden Massnahmen zu erreichen:

Bei einem Sauerstoffgehalt von unter 10 Vol.-%, einem Stickoxidgehalt von mindestens 2 Vol.-% und einem $SO_2$-Gehalt von mindestens 1 Vol.-% und vorzugsweise über 2 Vol.-% im zu behandelnden Gasstrom sollten:

a) im Dünnsäure-Produktionsturm (oder in den Dünnsäure-Produktionstürmen) Fullkörper mit einer Oberfläche von mehr als 90 $m^2/m^3$ zur Anwendung kommen, und

b) die obere Grenze der Verweilzeit des Gases zwischen dem Austritt aus der Denitrierungszone und dem Eintritt in den ersten Stickoxid-Absorptionsturm nach der Formel

$$Z_{max} = \frac{300}{[O_2]'}$$

worin Z max dieselbe Bedeutung wie in der vorangehenden Gleichung hat und $[O_2]'$ den Sauerstoffgehalt in Vol-% im Gas am Austritt der Denitrierungszone bedeutet, errechnet werden.

Bei einem Sauerstoffgehalt von mindestens 10 Vol.-%, einem Stickoxidgehalt von mindestens 2 Vol.-% und einem $SO_2$-Gehalt von mindestens 1 Vol.-% im in die $SO_2$-Verbindungszone eintretenden Gasstrom und falls im Dünnsäure-Produktionsturm (oder in den Dünnsäure-Produktionstürmen) Füllkörper mit einer Oberfläche von mehr als 90 $m^2/m^3$ zur Anwendung kommen, kann die obere Grenze der Verweilzeit des Gases zwischen dem Austritt aus der Denitrierungszone und dem Eintritt in den ersten Stickoxid-Absorptionsturm unter 30 Sekunden liegen.

Die Temperatur der nitrosehaltigen Säure, die in die Denitrierungszone eingeführt werden soll, wird vorzugsweise durch entsprechende Regelung der zusätzlichen indirekten Vorwärmung dieser Säure konstant gehalten. Der Gehalt an Nitrose in der Dünnsäure in dem oben genannten Kreislauf in Folge von Auflösung von Stickoxiden in dieser Säure in der $SO_2$-Verarbeitungszone sollte höchstens 0,03 Gewichts-% berechnet als $HNO_3$ betragen.

Die Konzentration der aus der Denitrierungszone abfliessenden Säure kann dabei durch Zusatz

# 0 000 707

von Dünnsäure oder Wasser in diese Zone konstant gehalten werden, wodurch die Zufuhr von Wasser zum System so niedrig wie möglich gehalten wird. Zur Regelung des $NO:NO_2$-Verhältnisses im Gasturm vor dessen Eintritt in die Stickoxid-Absorptionstürme wird die Menge an Nitrose-haltiger Säure variiert, welche in einer gegebenen Zeit in die Denitrierungszone geleitet wird.

Es ist besonders vorteilhaft, das Erwärmen der der Denitrierungszone zugeführten Säure durch Wärmeaustausch mit der aus dieser Zone ablaufenden Säure durchzuführen. Die Regelung der Temperatur kann durch teilweise Umgehung des Wärmeaustauschers herbeigeführt werden. Bei $SO_2$-Gasen mit weniger als 2 Vol.-% $SO_2$ ist es notwendig. Wärme einzusetzen, die nicht aus dem System stammt. Die benötigte zusätzliche Wärmemenge ist erstaunlich gering, und man kann für die indirekte Erwärmung der Säure Dampf oder andere Heizmittel von relativ niedrigem Temperaturniveau verwerten. Derartige Wärmeenergie ist in Industriebetrieben oft aus Kühlprozessen im Ueberfluss vorhanden.

Das erfindungsgemässe Verfahren erlaubt es, Eintrittsgase in die Denitrierungszone, deren Temperatur unter 60°C liegt, zu verarbeiten. Auch Eintrittsgase, deren Temperatur weniger als 45°C beträgt, können trotz eines $SO_2$-Gehaltes von nur 1 bis 1,5% noch zu Schwefelsäure verarbeitet werden.

Eine Erhöhung der Säuretemperatur vor Eintritt in die Denitrierungszone auf Temperaturen oberhalb 80°C ermöglicht eine weitere Verminderung des erforderlichen Reaktionsraumes zur $SO_2$-Verarbeitung.

Als geeignet für die Dünnsäure-Produktiontürme der $SO_2$-Verarbeitungszone erwiesen sich Fullkörper nach US—PS 2 867 425 oder US—PS 3 752 453 und besonders solche des weiter unten beschriebenen Typs vereinfachter Herstellung, weil dieselben bei grosser Oberfläche einen sehr geringen Gaswiderstand aufweisen.

Erfindungsgemäss dient im Turmsystem die Variation der nitrosehaltigen Säuremenge, welche der Denitrierungszone zugeführt wird, als Regel-Mittel für das Verhältnis $NO:NO_2$ im Gas, bevor das letztere in die Stickoxid-Absortionszone eintritt, und nicht der sonst in Turmsystemen meist übliche Zusatz von Wasser. Dieses Regelsystem nach der Erfindung erlaubt es, ein Turmsystem zu automatisieren.

In der US—PS 1 882 447 von H. F. Merrian umfasst die Denitrierungszone einen Produktdenitrierungsturm und einen eigentlichen Denitrator. Im Gegensatz zum Verfahren nach der Erfindung und der hierfür verwendeten Anlage wird in den Produktdenitrierungsturm von Merrian trockenes Gas aus einer Schwefelsäure-Kontaktanlage gemeinsam mit nitrosehaltiger Schwefelsäure eingeleitet, wobei in diesem Turm Wasser aus der Säure in den trockenen Gasstrom aufgenommen wird, der gleichzeitig auch Stickoxide aus der Säure absorbiert. Umgekehrt wird in der Vorbehandlungszone nach der Erfindung und der DE—OS 26 09 505 Feuchtigkeit aus dem in diese Zone eintretenden Gasstrom durch die sie durchstömende Dünnsäure aufgenommen.

Kurzbeschreibung der Figuren

Weitere Einzelheiten der Erfindung werden im folgenden anhand der in den Zeichnungen dargestellten Ausführungsbeispiele für Anlagen zur Durchführung des erfindungsgemäßen Verfahrens beschrieben. In den Zeichnungen zeigt

Fig. 1 in schematischer Darstellung einer erste Ausführungsform der erfindungsgemäßen Anlage mit Einleitung von Salpetersäure in eine zur Vorbehandlungszone fließende Dünnsäure,

Fig. 2 den linken Teil einer weiteren, ähnlichen Ausführungsform, in welcher aber Stickstoff-Sauerstoff-Verbindungen enthaltendes Abgas einer Ammoniakverbrennung in die Zufuhrleitung für $SO_2$-haltiges Gas eingeleitet wird.

Fig. 3 eine Teilansicht einer dritten Ausführungsform, in welcher nitrosehaltige Schwefelsäure in die Vorbehandlungszone eingelassen wird, und schließlich

Fig. 4 eine schematische Ansicht einer vierten Ausführungsform der erfindungsgemäßen Anlage, in welcher stickoxidhaltige Säure aus der Stickoxid-Absorptionszone mit oder ohne Zusatz von Salpetersäure in die Vorbehandlungszone eingeführt wird.

Einzelbeschreibung für die in den Zeichnungen dargestellten Ausfürungsformen

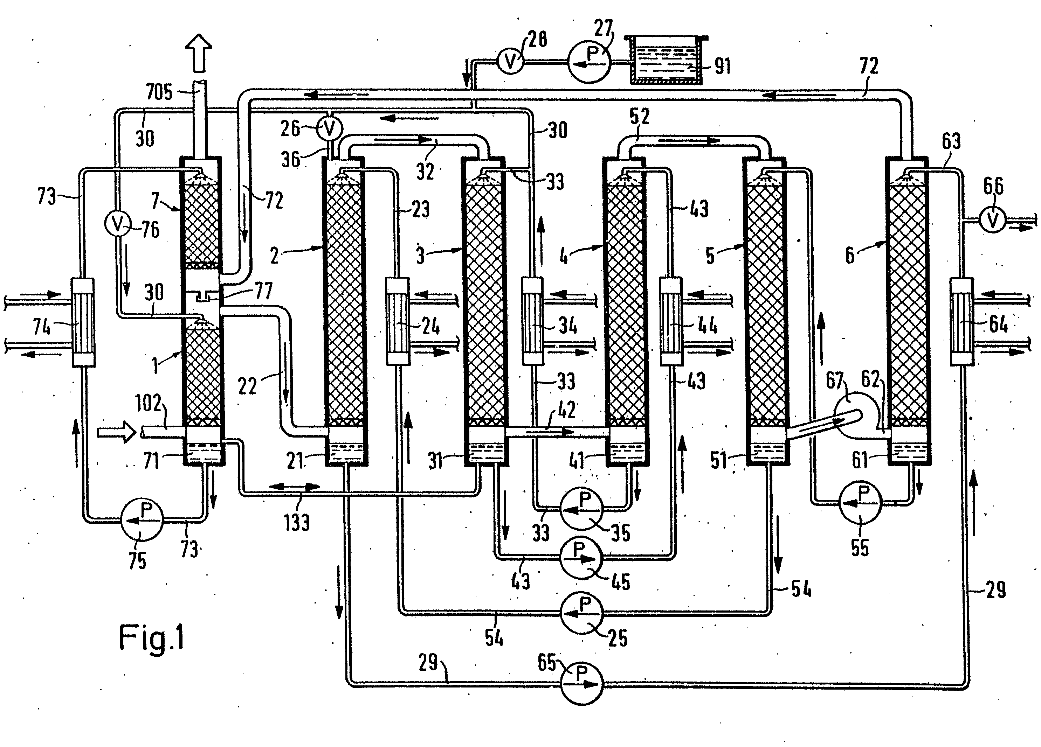

Die in Fig. 1 dargestellte Ausführungsform des erfindungsgemäßen Systems umfaßt sieben hintereinander geschaltete, als Behandlungszonen dienende Reaktionsapparate, welche in der Zeichnung als mit Säure berieselte Füllkörperschichten dargestellt sind. Der Kürze halber werden sie im folgenden als 'Türme" bezeichnet.

Ein im System nach dem erfindungsgemäßen Verfahren zu behandelnder Gasstrom, der neben Stickstoff noch etwa 10 Vol.-% Sauerstoff, einen zum Ablassen in die Umgebungsluft mindestens zeitweilig zu hohen Gehalt an $SO_2$ und einen erheblichen Gehalt an Wasserdampf z.B. 4 Vol.-% aufweist, wird über die Leitung 102 am untern Ende der im Turm 1 enthaltenen Füllkörperschicht eingeführt und vom oberen Ende derselben aus dem Turm 1 über die Gasleitung 22 zum unteren Ende der Füllkörperschicht in einem Denitrierturm 2 zugeführt. Vom oberen Ende des Turmes 2 gelangt der Gasstrom über die Leitung 32 zum oberen Ende eines ersten $SO_2$-Verarbeitungsturmes 3 der $SO_2$-Verarbeitungszone und nach abwärts gerichtetem Durchströmen der Füllkörperschicht des Turmes 3 über die Gasleitung 42 zum unteren Ende der Füllkörperschicht eines zweiten $SO_2$-Verarbeitungsturmes 4 und in den letzteren. Der Gasstrom durchfließt diese Füllkörperschicht aufwärts und wird vom oberen Ende des Turmes 4 der $SO_2$-Verarbeitungszone über die Gasleitung 52 zum oberen Ende eines ersten Turmes 5 der Stickoxid-Absorptionszone geleitet, dessen Füllkörperschicht er von oben nach unten durchströmt. Vom unteren Ende dieser Füllkörperschicht wird der Gasstrom vom Ventilator 67 abgesaugt und über die Leitung 62 in die im zweiten Absorptionsturm 6 befindliche Füllkörperschicht von unten nach oben gedrückt. Der Gasstrom verläßt nun das obere Ende des Turmes 6 über die Abgasleitung 72 und gelangt in den Säureentwässerungsturm 7, dessen Füllkörperschicht er von unten nach oben durchströmt. Erfindungsgemäß ist der Turm 7 unmittelbar oberhalb des Turmes 1 angeordnet und sein Inneres von demjenigen des Turmes 1 durch einen Gasflüssigkeitsverschluss 77 getrennt, welcher verhindert, daß in den Turm 7 unterhalb von dessen Füllkörperschicht eintretendes Gas aus Leitung 72 in den Raum des Turmes 1 oberhalb von dessen Füllkörperschicht und damit in die Gasleitung 22 gelangen kann.

Schließlich verläßt das nun von $SO_2$ freie oder nur noch einen zum Ablassen in die Umgebungsluft zulässigen Gehalt an $SO_2$ aufweisende Abgas das System über die Ablaßleitung 705.

In der Zeichnung sind nur die Säureflüsse zwischen den verschiedenen Türmen dargestellt. Jede Füllkörperschicht kann mit einem zusätzlichen Säure-Kreislauf ausgestattet werden. Diese Kreisläufe sind jedoch zur Vereinfachung der Darstellung nicht in der Zeichnung gezeigt. Unter den Füllkörperschichten befinden sich in den Türmen Flüssigkeitssümpfe, von welchen der den Türmen 1 und 7 gemeinsame Sumpf am Fußende des Turmes 1 mit 71, und diejenigen der Türme 2 bis 6 mit 21, 31, 41, 51 und 61 bezeichnet sind. Zum Transport der Berieselungssäure auf die Füllkörperschichten der Türme 2, 3, 4, 5, 6 und 7 dienen die Pumpen 25, 35, 45, 55, 65 und 75. Die aus der Füllkörperschicht des Turmes 7 abfließende Säure gelangt über den Gas-Flüssigkeitsverschluß 77 auf die Füllkörperschicht des Turmes 1. Die Wärmeaustauscher 24 und 74 dienen zum Erwärmen der Säuren, welche durch die Leitungen 23 bzw. 73 in die entsprechenden Füllkörperschichten der Türme 2 bzw. 7 strömen. Die Wärmeaustauscher 34, 44, und 64 dienen zum Kühlen der Säuren, die durch die Leitungen 33, 43 und 63 auf die entsprechenden Füllkörperschichten der Türme 3, 4 bzw. 6 fließen.

In den Ausführungsformen der Figuren 1 bis 4 gehören die Türme 3 und 4 zur $SO_2$-Verarbeitungszone, welche mit einer im Kreislauf durch die Füllkörperschichten dieser beiden Türme geführten Dünnsäure von weniger als 70 Gew.-% $H_2SOO_4$ berieselt wird, Bei dem in der Anlage nach Figur 1 durchgeführten Verfahren beträgt die Konzentration im Turm 3 und 4 ca. 65 Gew.-% $H_2SO_4$. Der Turm 4 befindet sich am Ende der $SO_4$-Verarbeitungszone. Es wurde gefunden, daß die Säure am Ende dieser Zone bereits merkliche Mengen Stickoxide aufnimmt.

Es ist üblich, den Nitrosegehalt von Schwefelsäure dadurch zu messen, daß man in eine vorgelegte Menge einer sauren $KMnO_4$-Lösung die zu prüfende Säure einfließen läßt, bis die Rotfärbung des $MnO_4$-Anions verschwindet. Diese Analysenmethode beruht auf der Oxidation der Nitrose zu Salpetersäure. Es wurde festgestellt, daß die nach dieser Method gefundenen Werte des Gehaltes an an Sauerstoff gebundenem Stickstoff bei der Anwendung auf Dünnsäure aus dem Ablauf am Ende der $SO_2$-Verarbeitungszone zu niedrig liegen. Ermittelt man den gesamten Stickstoffgehalt dieser Säure durch andere analytische Methoden — wie z.B. nach Kjeldahl — erhält man zwei- bis dreimal Höhere Werte an Gesamtstickstoffgehalt. Es wird angenommen, daß die Säure neben Nitrose auch einen Anteil an Salpetersäure enthält.

Beim Verfahren in der Anlage nach Fig. 1 wurde in der Säure, welche aus den zweiten $SO_2$-Verarbeitungsturm 4 abfließt, ein Gehalt an Stickstoff-Sauerstoff-Verbindungen ausgedrückt als 1/2 $N_2$ von über 1 g/Liter gefunden. Dies entspricht einem $HNO_3$-Gehalt von 4,5 g/Liter. Wie aus Figur 1 zu entnehmen ist, gelangt die aus der Füllkörperschicht des Turmes 4 abfließende Säure über den Sumpf 41 dieses Turmes und die Pumpe 35 durch die Leitung 33 zum Wärmeaustauscher 34 und weiter über die Leitung 33 auf die Füllkörperschicht des Turmes 3 und vom Sumpf 31 am Fußende dieses Turmes über die Leitung 43 und den die Säure kühlenden Wärmeaustauscher 44 mittels der Pumpe 45 wieder zum oberen Ende des Turmes 4. Die aus der Füllkörperschicht des Turmes 1 in den Sumpf 71 dieses Turmes abfließende Dünnsäure wird nun von der Pumpe 75 über die Leitung 73 durch den die Säure erwärmenden Wärmeaustauscher 74 und weiter durch die Leitung 73 in das obere Ende des Turmes 7, dessen Füllkörperschicht die Säureentwässerungszone darstellt, gefördert. Der vom Dünnsäurekreislauf der $SO_2$-Verarbeitungszone getrennte Dünnsäurekreislauf für die Vorbehandlungszone über die Leitung 73 wird nun dadurch geschlossen, daß die Dünnsäure, die am obern Ende des Turmes 7 auf dessen Füllkörperschicht gerieselt wird, durch die letztere Schicht hindurch und durch den am unteren Ende des Turmes 7 befindlichen Turm 1 befindliche Füllkörperschicht wieder einfließt.

Die von dieser Säure bei ihrem Kreislauf in der Füllkörperschicht des Turmes 1 aufgenommene Wassermenge wird so direkt an das Ende des Systems, d.h. in die Füllkörperschicht des Turmes 7 geführt und dort an das über Leitung 72 zugeführte Abgas des Systems abgegeben.

Beim Durchlaufen der Vorbehandlungszone im Turm 1 hat sich die Dünnsäure bereits erwärmt; durch die zusätzliche Erwärmung im Wärmeaustauscher 74 wird die Abgabe von Wasser in der Füllkörperschicht des Turmes 7 verstärkt. Das verdunstete Wasser verläßt als Wasserdampf zusammen mit den $SO_2$-freien Abgasen das System über die Leitung 705.

Durch diese Entwässerungsmaßnahme, durch die der Gasstrom in der Vorbehandlungszone getrocknet wird, wird weniger oder kein Wasserdampf im Gasstrom weitertransportiert und hierdurch ermöglicht, in der Füllkörperschicht des Denitrierturmes 2 sowie in den Füllkörperschichten der Stickoxidabsorptionstürme 5 und 6 eine genügende Säurekonzentration aufrechtzuerhalten (z.B. 75% Gew.-% $H_2SO_4$).

Durch Regelung der Heizmittelzufuhr zum Wärmeaustauscher 74 kann die Menge des abgegebenen Wassers gesteuert werden, wodurch eine gewünschte Konzentration der Säure im Kreislauf über die Füllkörperschichten der Türme 7 und 1 eingestellt werden kann. Wie bereits vorangehend erläutert, gelangt die abfließende Säure aus der Füllkörperschicht des Turmes 7 über den Gasverschluß 77 direkt auf die Füllkörperschicht des Turmes 1.

In der in Fig. 1 dargestellten Auführungsform der erfindungsgemäßen Anlage wird nun aus dem Kreislauf der Dünnsäure in der $SO_2$-Verarbeitungszone ein Teil abgezweigt und über die Leitung 30 und das Ventil 76 auf die Füllkörperschicht des Vorbehandlungsturmes 1 und dadurch in den Säurekreislauf der Türme 1 und 7 geleitet, wodurch diese Füllkörperschicht mit den in der Füllkörperschicht des Turmes 4 von der Säure aufgenommenen Stickstoffverbindungen versorgt wird.

Die Zufuhr von Säure über die Leitung 30 in den Kreislauf der Füllkörperschichten der Türme 7 und 1 bewirkt ein Ansteigen des Säureniveaus im beiden Türmen gemeinsamen Sumpf 71, wodurch Säure über die Leitung 133 in die $SO_2$-Verarbeitungszone zurückgeleitet wird. Es ist von Vorteil, die Konzentration der Säure in der Vorbehandlungszone möglichst tief zu halten, weil dann die Säure keine Stickoxide aufnimmt, sondern diese an den Gasstrom abgibt. Ein übermäßiges Absenken der Konzentration ist jedoch nicht zulässig, wenn relativ feuchte $SO_2$-haltige Gase verarbeitet werden müssen, weil dann die Säure zu schwach ist, um Wasser aufzunehmen, und das Wasser dann in die Denitrierungszone (Turm 2) gelangt, wodurch man dort einen zu starken Abfall der Konzentration herbeiführen würde. In der in der Figur 1 dargestellten Anlage liegt die Konzentration der Säure im Kreislauf über die Füllkörperschichten der Türme 7 und 1 bei ca. 60 Gew.-% $H_2SO_4$. Die Konzentration der Säure in der $SO_2$-Verarbeitungszone (Füllkörperschichten 3 und 4) liegt wie gesagt bei 65 Gew.-% $H_2SO_4$. Der zu behandelnde Gasstrom weist beim Eintritt in den Vorbehandlungsturm 1 über die Leitung 102 vorzugsweise eine Temperatur von ca. 40°C auf.

Entsprechend der Bildung von Schwefelsäure in den Füllkörperschichten der Türme 3 und 4 steigt das Niveau der Sümpfe 31 und 41 langsam an. Damit ein Gleichgewichtszustand herbeigeführt werden kann, wird über die Leitungen 30 und 36 kontinuierlich etwas Säure durch das Ventil 26 in die Füllkörperschicht des Denitrierturmes 2 geleitet. Die denitrierte Säure mit ca. 75 Gew.-% $H_2SO_4$ aus dem Sumpf 21 des Turmes 2 wird über die Leitung 29 mittels der Pumpe 65 zum Kühler 64 und von diesem über die Leitung 63 zum oberen Ende der Füllkörperschicht des Turmes 6 gefördert, welcher das Ende der Absorptionszone bildet. Ueber das Ventil 66 wird kontinuierlich etwas Säure aus dem System entnommen. Dies ist die produzierte Schwefelsäure mit einem Gehalt von vorzugsweise 75 — 85 Gew.-% $H_2SO_4$. Die Stickoxidverluste des gesamten Systems, werden in der Anlage nach Fig. 1 durch Zugabe von Salpetersäure ausgeglichen, die im Behälter 91 gespeichert ist und durch die Pumpe 27 und das Ventil 28 in die Leitung 30 zugespeist wird.

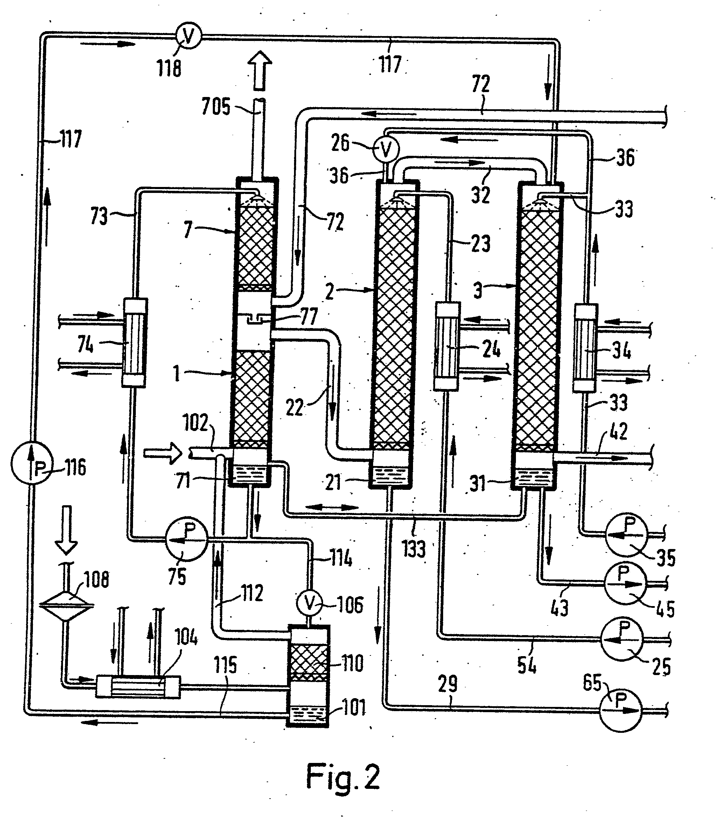

In der Ausführungsform einer erfindungs gemäßen Anlage nach Fig. 2 wird keine Dünnsäure aus dem Kreislauf derselben durch die $SO_2$-Verarbeitungszone in die Füllkörperschicht des Turmes 1 eingeleitet. Vielmehr erfolgt in dieser Ausführungsform die Zufuhr von an Sauerstoff gebundenem Stickstoff nicht in Form von Salpetersäure, sondern in Form von gasförmigen Stickoxiden; dabei ist es vorteilhaft, die gasförmigen Stickoxide nicht direkt in die $SO_2$-Verarbeitungszone (Füllkörperschichten 3 und 4) einzuleiten. Es wurde gefunden, daß eine raschere und kräftigere Wirkung erzielt wird, wenn man die Stickoxide zuerst in Schwefelsäure auflöst und danach die stickstoffhaltige Schwefelsäure in die $SO_2$-Verarbeitungszone leitet.

In Fig. 2 ist mit 108 eine Vorrichtung zur katalytischen Oxidation von Ammoniak bezeichnet. Die gebildeten Stickoxide werden im Wärmeaustauscher 104 gekühlt und durchströmen anschließend die Kolonne 110 von unten nach oben. Jener Teil der Stickoxide welcher in der Kolonne 110 nicht absorbiert wird, gelangt über die Leitung 112 und die Leitung 102 in den Hauptgasstrom der Anlage. Aus der Leitung 114 kann über das Ventil 106 Dünnsäure aus dem Sumpf 71 des Turmes 1 in die Kolonne 110 geleitet werden. Die mit Stickoxiden gesättigte Dünnsäure gelangt über den Sumpf 101 und die Leitung 115 zur Pumpe 116 und über Leitung 117 und Ventil 118 in das obere Ende der Füllkörperschicht des Turmes 3. Die durch Leitungen 115 und 117 dem Kreislauf Turm 1 — Turm 7 — Wärmeaustauscher 74 über die Leitung 73 entzogene Dünnsäure wird, wie bereits erwähnt, durch über die Ausgleichsleitung 133 zufließende Dünnsäure ersetzt.

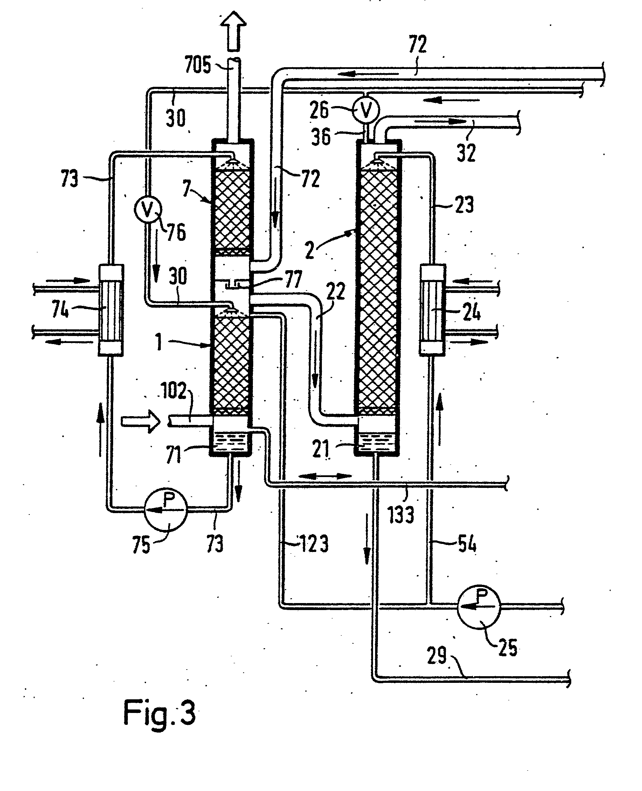

In der in Fig. 3 dargestellten Ausführungsform der erfindungsgemäßen Anlage wird die Stickstoff-Sauerstoff-Verbindung der Vorbehandlungszone durch zusätzliche Berieselung der Füllkörperschicht des Turmes 1 mit nitrosehaltiger Schwefelsäure vorgenommen, die aus der Ueberführungsleitung 54 für die letztere vom Sumpf 51 des ersten Stickoxidabsorptionsturmes 5 über die Leitung 123 abgezweigt und dem oberen Ende der Füllkörperschicht des Turmes 1 zugeführt wird.

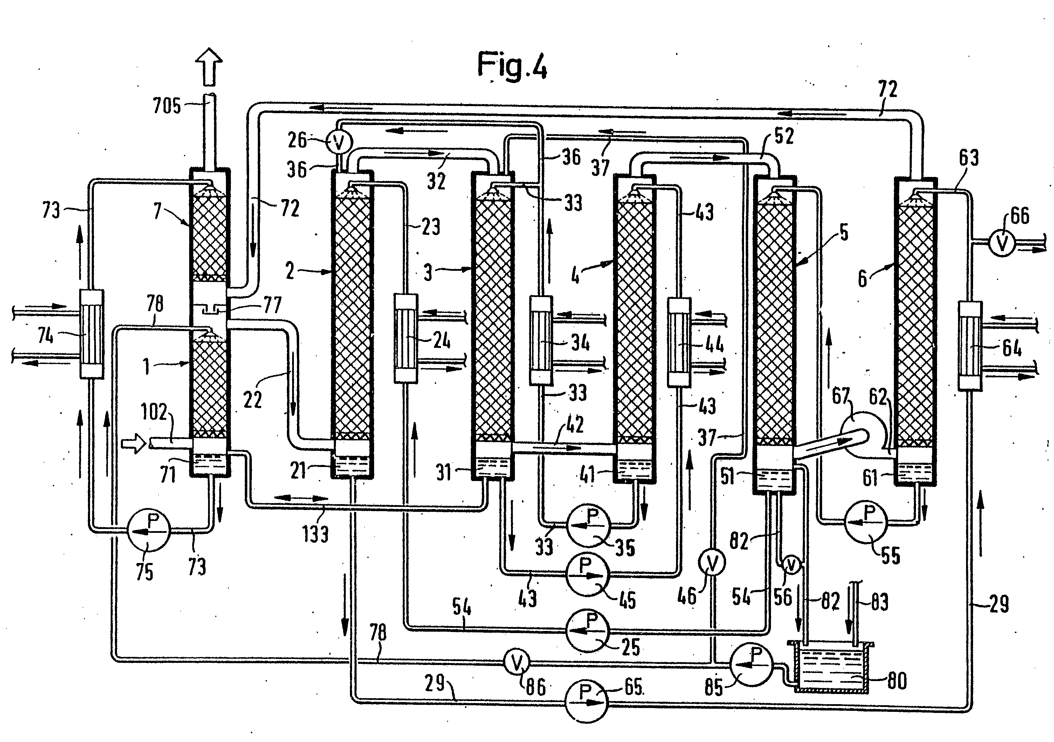

In der Ausführungsform der Anlage nach Fig. 4 wird eine Flüssigkeit, welche an Sauerstoff gebundenen Stickstoff, vor allem auch in Form von Salpetersäure enthält und einem besonderen Behälter 80 entnommen wird, in die mit Dünnsäure aus Turm 4 über Leitung 33 berieselte Füllkörperschicht des Turmes 3 der $SO_2$-Verarbeitungszone am oberen Ende der letzteren eingeführt.

Hierbei wird während des Verbrauches des Stickstoffgehaltes der zugeführten Flüssigkeit im Turm 3 eine überraschend starke Reaktion ausgelöst, wodurch eine Beschleunigung der $SO_2$-Verarbeitung herbeigeführt wird. Dabei ist es wesentlich, daß die Salpetersäure oder die Stickoxide in der flüssigen Phase auf den Füllkörpern des Turmes 3 mit der Dünnsäure intim vermischt werden.

Die nitrosearme Säure aus dem Denitrierturm 2 durchströmt die Absorptionszone (Türme 6 und 5), und die dort gebildete nitrosehaltige Säure fließt aus der Füllkörperschicht des Turmes 5 in den Sumpf 51 zum Teil auch über die Leitung 82 und das Ventil 56 in den Behälter 80.

Im Behälter 80 befindet sich Schwefelsäure mit einem hohen Gehalt an Nitrose und/oder Salpetersäure. Außerdem kann Salpetersäure durch die Leitung 83 in den Behälter 80 zugeleitet werden, um die normalen Verluste des Systems an Stickoxiden zu kompensieren. Sobald der NO-Gehalt des die Stickoxid-Absorptionszone durch Leitung 72 verlassenden Gasstromes über einen zulässigen Wert ansteigt, oder falls der Anstieg der Konzentration an NO in diesem Gasstrom über eine festgelegte Geschwindigkeit hinaus erfolgt, wird die Pumpe 85 in Betrieb gesetzt, und stark nitrose- und/oder salpetersäurehaltige Schwefelsäure fließt über das Ventil 46 und die Leitung 37 in die Füllkörperschicht des Turmes 3.

Erfindungsgemäß wird nun der Vorbehandlungsturm 1 mit einem Teil der Flüssigkeit, welche an Sauerstoff gebundenen Stickstoff enthält, beschickt, indem in der Anlage nach Fig. 4 das Ventil 46 ganz oder teilweise geschlossen wird, während das Ventil 86 geöffnet wird. Hierdurch wird die von der Pumpe 85 geförderte, stark nitrose- und/oder salpetersäurehaltige Schwefelsäure aus dem Behälter 80 über die Leitung 78 auf die Füllkörperschicht des Turmes 1 geleitet.

Sobald der NO-Gehalt der Gase, welche die Absorptionszone verlassen, unter einen festgelegten Wert abgesunken ist, oder wenn die Geschwindigkeit der NO-Abnahme einen fixierten Wert überschreitet, kann das Ventil 46 vollständig geschlossen werden.

Durch den erfindungsgemäß Einsatz von Stickstoff-Sauerstoff-Verbindungen in der Vorbehandlungszone wird das Gesamtsystem wesentlich intensiviert und es ist z.B. in der Anlage nach Fig. 1 bei der Verarbeitung von ca. 1 Vol.-%igen $SO_2$-haltigen Gasen nicht notwendig, an irgendeiner Stelle des Systems auf Temperaturen über 65°C anzuwärmen, um eine genügende Denitrierung und eine restlose $SO_2$-Verarbeitung im Gesamtsystem sicherzustellen. Das Arbeiten bei relativ tiefen Temperaturen bedeutet ein Einsparen an Wärmeenergie und hat außerdem den wesentlichen Vorteil, daß vergleichsweise billige Werkstoffe Verwendung finden können.

Wenn erfindungsgemäß stickoxidhaltige Säure in die Schicht des Turmes 1 eingeleitet wird, kann ohne Erhöhung des Nitrosegehaltes der Säure im Sumpf 51 und ohne Erhöhung des Stickoxidgehaltes der Abgase des Systems wesentlich mehr $SO_2$-Gas verarbeitet werden. Bei einem Zusatz von 0,05 Mol an Sauerstoff gebundenem Stickstoff pro $Nm^3$ Gas in die schicht des Turmes 1 kann die Leistung des Systems auf 460 $Nm^3/h$ gesteigert werden.

Ein Zusatz von 0,3 Mol an an Sauerstoff gebundenem Stickstoff pro $Nm^3$ Gas erlaubt eine Steigerung der Leistung auf 650 $Nm^3/h$.

Ohne die Maßnahmender Erfindung gelingt es, wenn der Stickoxidgehalt im Abgas des Systems unter 400 ppm gehalten werden muß, auch bei optimaler Regelung nur, 400 $Nm^3/h$ Gas im System zu verarbeiten.

Der Nitrosegehalt der Säure im Sumpf 51 beträgt 2 Gew.-%, berechnet als $HNO_3$ (100%ige Salpetersäure).

Die Säure im Sumpf 41 enthält 0,3 Gew.-% an Sauerstoff gebundenem Stickstoff, berechnet als $HNO_3$.

Der Zusatz von an Sauerstoff gebundenem Stickstoff über die Leitung 30 und das Ventil 76 in die Schicht des Turmes 1 bewirkt in der Schicht eine exotherme Reaktion. Bei einem Zusatz von 0,3 Mol an Sauerstoff gebundenem Stickstoff pro $Nm^3$ Gas wird eine Erhöhung der Säureablauftemperatur aus der Schicht des Turmes 1 um 4 Celsiusgrade beobachtet. Die erwärmte Säure gelangt wie oben beschrieben in den Sumpf 71 und wird durch den Wärmeaustauscher 74 geleitet. Dank der Zufuhr von an Sauerstoff gebundenem Stickstoff in die Schicht des Turmes 1 hat die Säure vor Eintritt in den Wärmeaustauscher 74 bereits eine Temperatur von 60°C. Mit dem Heizmedium für den Wärmeaustauscher 74 braucht durch die erfindungsgemäßen Maßnahmen nun nur noch etwa die halbe Wärmemenge zugeführt zu werden, um am Austritt des Wärmeaustauschers eine Temperatur von 63°C zu erreichen. Die erwärmte Säure gelangt über die Leitung 73 in die Schicht des Turmes 7 und gibt dort wie ebenfalls oben beschriebenen Wasserdampf an die trockenen Abgase aus der Stickoxid-Absorptionszone ab. Dabei kühlt sich die Säure auf ca. 50°C ab und gelangt in die Schicht das Turmes 1 zurück. Durch den Zusatz von Säure, welche an Säure gebundenen Stickstoff enthält, über das Ventil 76 zur Schicht 1 steigt das Niveau im Sumpf 71 an und eine entsprechende Menge Säure fließt über die Leitung 133 in den Sumpf 31 und damit in den Kreislauf der $SO_2$-Verarbeitungszone (Türme 3 und 4) zurück.

Die Arbeitsweise der Anlage nach Fig. 1 wird noch in dem folgenden Ausführungsbeispiel erläutert.

# 0 000 707

Beispiel

Ein $SO_2$-Gasstrom enthält pro Nm³ (1 Normalkubikmeter = 1 m³ bei 0°C und 1 bar) folgende Gramm-Molmengen:

| | | |
|---|---|---|
| $SO_2$ | 0,5 —0,9 | Mol |
| $H_2O$ | 2,8 —3,1 | Mol |
| $O_2$ | 4 —6 | Mol |
| $CO_2$ | 1,2 —1,6 | Mol |
| NO | 0,01 —0,02 | Mol |

Der Rest besteht aus Stickstoff.

Ein regelbarer Volumenstrom dieses Gases wird in die Füllkörperschicht des Turmes 1 einer Anlage nach Fig. 1 eingeleitet. Das Volumen der Füllkörperschichten der Türme 1 und 7 beträgt je 1 m³. Die Schichten der Türme 2 bis 6 enthalten je 2,6 m³ Füllkörper. Die Summe aller Füllvolumina beträgt demnach 14 m³. Als Füllmaterial werden Polyäthylenkörper wie in DT—OS 24 16 955 beschrieben verwendet. Die Füllung hat eine Oberfläche von ca. 300 m²/m³. Die Säureumwälzung in den Füllkörperschichten der Türme 1 und 7 erfolgt, wie in Fig. 1 dargestellt und beträgt 2 Liter/Nm³ Gas. Die Schicht des Denitrierturmes 2 wird in der in Fig. 1 dargestellten Art mit 1 Liter/Nm³ Gas berieselt. Die Schichten der $SO_2$-Verarbeitungstürme 3 und 4 haben eine Berieselung von je 3 Liter/Nm³ Gas. Die Berieselung der Schichten der Absorptionstürme 5 und 6 wird durch Pumpen und Leitungen, welche in Fig. 1 nicht dargestellt sind, verstärkt. Diese nicht dargestellten Pumpen fördern Säure aus den Sümpfen 51 bzw. 61 wieder zum oberen Ende der Füllungen der Türme 5 und 6, so daß sich zusammen mit den in Fig. 1 dargestellten Säureflüssen in den Füllungen eine Berieselung von 4 Liter/Nm³ Gas ergibt. Die Säuretemperatur am Austritt der Wärmeaustauscher 74 und 24 beträgt 63°C. Die Säuretemperatur nach den Wärmeaustauschern 34, 44 und 64 liegt zwischen 30 und 40°C. Bezogen auf eine Temperatur von 15°C haben die umgepumpten Säuren folgendes Litergewicht:

| | |
|---|---|
| Türme 1 und 7 | 1,5 kg/Liter (59,7% $H_2SO_4$; 48,1° Bé) |
| Türme 2, 5 und 6 | 1,67 kg/Liter (74,7% $H_2SO_4$; 57,9° Bé) |
| Türme 3 und 4 | 1,56 kg/Liter (65,2% $H_2SO_4$; 51,8° Bé) |

Die in den Schichten der Absorptionstürme 5 und 6 absorbierten Stickoxide werden mit der Säure über den Sumpf 51 durch die Pumpe 25 über die Leitungen 54 und 23 auf die Schicht des Denitrierturms 2 geleitet, in welcher diese Stickoxide durch die Reaktion mit $SO_2$ als NO in den Gasstrom gelangen, welcher den Turm 2 durch die Leitung 32 verlässt. Die $SO_2$-Verarbeitung in den Schichtung der Türme 3 und 4 ist umso besser, je mehr Stickoxide im Gasstrom enthalten sind.

Ueber die Leitung 23 werden pro Nm³ Gas ein Liter nitrosehaltige Säure in die Schicht des Denitrierturmes 2 geleitet. Je höher der Nitrosegehalt der Säure ist, umsomehr $SO_2$-haltiges Gas kann im System verarbeitet werden. Bei zu hohem Nitrosegehalt der Säure steigt jedoch der Stickoxid-Gehalt der Abgase des Systems an. Zur Regelung des Nitrosegehaltes der Säure im Sumpf 51 wird aus dem Behälter 91 Salpetersäure über die Pumpe 27 und das Ventil 28 über die Leitung 36 und über das Ventil 26 auf die Schicht des Denitrierturmes 2 geleitet.

Erfindungsgemäß wird nun etwa ein Drittel der stickoxidhaltigen Säure, die aus dem Sumpf 41 des Turmes über die Leitungen 33 und 43 in der $SO_2$-Verarbeitungszone zirkuliert, nach dem Erwärmen im Wärmeaustauscher 34 auf etwa 30 bis 40°C abgezweigt und über die Leitung 30 und das Ventil 76 am oberen Ende des Turmes 1 in diesen eingeleitet und seine Füllkörperschicht mit dieser abgezweigten Säure zusätzlich zu der aus dem Turm 7 herabfließenden Dünnsäure berieselt.

Hierdurch kann ohne Erhöhung des Nitrosegehaltes der Säure im Sumpf 51 und ohne Erhöhung des Stickoxidgehaltes der Abgase des Systems wesentlich mehr $SO_2$-Gas verarbeitet werden, wie bereits weiter oben erläutert wurde, als ohne diese erfinderischen Maßnahmen.

## Patentansprüche

1. Verfahren zum Abtrennen von $SO_2$ aus einem mindestens 5 g Wasser/m³ enthaltenden Gasstrom, der das $SO_2$ mindestens zeitweilig in zum Ablassen in die Umgebungsluft unzulässig hoher Konzentration enthält, unter Gewinnung von Schwefelsäure nach dem Stickoxidverfahren in einem zur Erzeugung einer starken Schwefelsäure von über 70 Gewichts-% $H_2SO_4$ geeigneten System von Reaktionszonen, wobei das $SO_2$-haltige Gas (mit einem zur Durchführung des Stickoxidverfahrens ge-

11

eigneten Sauerstoffgehalt) unter einem zum Durchleiten des Gases durch das System ausreichenden Ueberdruck nacheinander

(a) durch eine Vorbehandlungszone;
(b) durch eine Denitrierungszone;
(c) durch eine SO$_2$-Verarbeitungszone,

in welcher es im intimen Kontakt mit im Kreislauf durch diese Zone geführter verdünnter Schwefelsäure mit einem Gehalt von weniger als 70 Gew.-% H$_2$SO$_4$ (Dünnsäure) gebracht wird, wobei die Verweilzeit des SO$_2$ und Stickoxide enthaltenden Gases zwischen dem Austritt aus der Denitrierungszone und dem Eintritt in den ersten Turm der Stickoxid-Absorptionszone bei Konzentrationen von mindestens 5 Vol.-% SO$_2$ und mindestens 10 Vol.-% O$_2$ im Eintrittsgas in die Denitrierungszone kürzer als 30 Sekunden gehalten wird, während bei kleineren SO$_2$-Gehalten oder kleineren O$_2$-Gehalten im genannten Eintrittsgas die obere Grenze der Verweilzeit sich nach der Formel

$$Z_{max} = \frac{1500}{[SO_2]\,[O_2]}$$

errechnet, worin $Z_{max}$ die Verweilzeit in Sekunden [SO$_2$] den Gehalt an SO$_2$ im Eintrittsgas in die Denitrierungszone in Vol.-% und [O$_2$] den Gehalt an O$_2$ im gleichen Eintrittsgas, ebenfalls in Vol.-%, bedeuten; und

(d) durch eine Stickoxid-Absorptionszone geleitet wird, wobei mindestens ein Teil der nitrosehaltigen, aus der Absorptionszone abfliessenden Schwefelsäure indirekt auf eine Temperatur über 60°C erhitzt und unter Umgehung der SO$_2$-Verarbeitungszone direkt in die Denitrierungszone eingeleitet wird, in welcher Stickoxide aus dieser Säure in den Gasstrom überführt werden, wodurch aus der Denitrierzone abfliessende, von Nitrose praktisch freie Säure mit einem Gehalt von über 70 Gewichts-% H$_2$SO$_4$ aus dem System entnommen werden kann; und ein Teil der letztgenannten Säure wieder durch die Absorptionszone zirkuliert und dort Stickoxide aus dem Gasstrom absorbiert; wobei weiter

($\alpha$) ein Teil der genannten Dünnsäure aus dem Kreislauf durch die SO$_2$-Verarbeitungszone entnommen und in der Vorbehandlungszone in Kontakt mit dem feuchten SO$_2$-haltigen Gasstrom gebracht wird,

($\beta$) ein erster Teil der aus der Vorbehandlungszone abfliessenden, durch Feuchtigkeit aus dem Gas stärker verdünnten, von in den Gasstrom abgebbaren Stickoxiden praktisch freien Dünnsäure unter Umgehung der Denitrierungszone direkt in den Kreislauf der SO$_2$-Verarbeitungszone zurückgeführt wird; und

($\gamma$) ein anderer Teil der aus der genannten Vorbehandlungszone abfliessenden Dünnsäure in eine Säureentwässerungszone geleitet wird, in welcher Wasser aus der Dünnsäure verdampft wird, worauf die entstehende höher konzentrierte Dünnsäure wieder in den Dünnsäurekreislauf zurückgeführt wird, dadurch gekennzeichnet, dass

($\delta$) in die Vorbehandlungszone eine Stickstoff-Säuerstoff-Verbindung (wie in der Beschreibung definiert) in solcher Menge eingeführt wird, dass beim Kontakt des SO$_2$-haltigem Gasstromes mit Dünnsäure in dieser Zone der Gehalt der Stickstoff-Sauerstoff-Verbindung in derselben stets mindestens 0,8 g Stickstoff je Mol im zu behandelnden Gasstrom enthaltenen SO$_2$ entspricht, wobei jedoch der Gehalt an Stickstoff-Sauerstoff-Verbindung, der in die Vorbehandlungszone eingeführt wird, höchstens 11,2 g Stickstoff je Mol SO$_2$ des Gasstroms entspricht.

2. Verfahren nach Anspruch 1, dadurch gekennzeichnet, dass die Stickstoff-Sauerstoff-Verbindung in Form einer diese enthaltenden Schwefelsäure, deren H$_2$SO$_4$-Gehalt unter 70 Gew.-% liegt, zugeführt wird.

3. Verfahren nach Anspruch 2, dadurch gekennzeichnet, dass die Schwefelsäure aus der SO$_2$-Verarbeitungszone entnommen wird und dass ihr vor ihrem Eintritt in die Vorbehandlungszone die Stickstoff-Sauerstoff-Verbindung zugefügt wird.

4. Verfahren nach Anspruch 1, dadurch gekennzeichnet, dass in die zur Vorbehandlungszone fliessende Dünnsäure Salpetersäure eingeleitet wird.

5. Verfahren nach Anspruch 3 oder 4, dadurch gekennzeichnet, dass aus der Vorbehandlungszone (1) austretende Dünnsäure in einer Säureentwässerungszone (7) mit den Abgasen aus der Stickoxid-Absorptionszone (5, 6) in Kontakt gebracht und die resultierende Schwefelsäure mit von ihr aus den Abgasen aufgenommenem Stickoxid und etwas erhöhtem H$_2$SO$_4$-Gehalt direkt in die Vorbehandlungszone (1) wieder eingeleitet wird.

6. Verfahren nach Anspruch 5, dadurch gekennzeichnet, dass die Dünnsäure aus der Säureentwässerungszone (7) über einen Gas-Flüssigkeitsverschluss (77) direkt in die Vorbehandlungszone (1) fliesst.

7. Verfahren nach einem der Ansprüche 1 bis 6, dadurch gekennzeichnet, dass die H$_2$SO$_4$-Konzentration der in der Vorbehandlungszone (1) mit dem SO$_2$-haltigen Gasstrom in Kontakt tretenden

# 0 000 707

Säure niedriger gehalten wird als die $H_2SO_4$-Konzentration der Säure in der $SO_2$-Verarbeitungszone (3, 4).

8. Verfahren nach Anspruch 1, dadurch gekennzeichnet, dass die Stickstoff-Sauerstoff-Verbindung in Form von Absorptionssäure aus der Stickoxid-Absorptionszone (5, 6) entnommen und, gegebenenfalls unter Zusatz von Salpetersäure, in die Vorbehandlungszone (1) eingeführt wird.

9. Anlage zur Durchführung des in den Ansprüchen 1 bis 8 beschriebenen Verfahrens, welche nacheinander umfasst:

(a) eine Vorbehandlungszone

(b) eine Denitrierungszone

(c) eine $SO_2$-Verarbeitungszone und

(d) eine Stickoxid-Absorptionszone

mit je Zone mindestens einem Gas-Flüssigkeits-Reaktionsapparat, der mit einem für die Aufnahme von aus dem unteren Ende des betreffenden Apparates austretender Flüssigkeit dienenden Sumpf versehen ist, sowie:

(e) eine Leitung für den Gasstrom, welche nacheinander am einen Ende der Vorbehandlungszone in diese eintritt und vom anderen Ende der letzteren zur Denitrierungszone, von dieser zur $SO_2$-Verarbeitungszone und von der letzteren zur Stickoxid-Absorptionszone und alsdann vom oberen Ende der letzteren zum unteren Ende der Säureentwässerungszone und schliesslich vom Ende der letzteren Zone ins Freie führt,

(f) eine Kreislaufleitung für Dünnsäure durch die $SO_2$-Verarbeitungszone,

(g) eine Kreislaufleitung für Dünnsäure durch die Vorbehandlungs- und Entwässerungszone und schliesslich

(i) eine Kreislaufleitung für Säure vom in Gasstromflussrichtung ersten Sumpf der Stickoxid-Absorptionszone zum oberen Ende der Denitrierungszone und vom Sumpf der letzteren zurück zum oberen Ende des letzten Reaktionsapparates der Stickoxid-Absorptionszone, sowie

(j) eine Ausgleichsleitung, welche den letzten Sumpf der Vorbehandlungszone mit dem in Gasstromflussrichtung ersten Sumpf der $SO_2$-Verarbeitungszone verbindet, dadurch gekennzeichnet, dass eine Zufuhrleitung für Stickstoff-Sauerstoff-Verbindung enthaltende gasförmige oder flüssige Substanz vorgesehen ist, die in einem Reaktionsapparat der Vorbehandlungszone mündet und dieser die genannte Verbindung, zusätzlich zu dem zu behandelnden Gasstrom und der Dünnsäure aus der Kreislaufleitung (g) zuführt.

10. Anlage nach Anspruch 9, dadurch gekennzeichnet, dass der Reaktionsapparat der Säureentwässerungszone über demjenigen der Vorbehandlungszone angeordnet und zwischen beiden ein Gas-Flüssigkeits-Verschluss vorgesehen ist, durch welchen Dünnsäure aus der Säureentwässerungszone direkt in die Vorbehandlungszone herunterfliessen kann, ohne dass die Gasströme durch die beiden Zonen sich vermischen können.

11. Anlage nach einem der Ansprüche 9 oder 10, dadurch gekennzeichnet, dass eine Abzweigungsleitung (30) aus der Dünnsäure-Kreislaufleitung (f) (33) der $SO_2$-Verarbeitungszone (3, 4) vorgesehen ist, welche Abzweigungsleitung (30) in Dünnsäureströmungsrichtung vor dem oberen Ende des in Gasstromrichtung ersten Reaktionsapparats (3) der $SO_2$-Verarbeitungszone in die Vorbehandlungszone (1) eingeführt wird und diese im gleichen Sinne wie die Dünnsäure des Kreislaufs nach (g) (73) entgegen dem die Vorbehandlungszone (1) von unten nach oben durchströmenden Gasstrom durchfliesst.

12. Anlage nach Anspruch 11, dadurch gekennzeichnet, dass ein die Säure aufheizender Wärmeaustauscher (34) in der Kreislaufleitung nach (f) (33) vorgesehen ist und dass die Abzweigleitung (30) in Dünnsäureflussrichtung stromab diesem Wärmeaustauscher (34) vor Eintritt in den ersten Reaktionsapparat (3) der $SO_2$-Verarbeitungszone abzweigt.

13. Anlage nach einem der Ansprüche 9 oder 10, dadurch gekennzeichnet, dass eine Ueberführungsleitung (82, 78) vom Sumpf (51) des in Gasströmungsrichtung ersten Reaktionsapparates der Stickoxidabsorptionszone (5) vorgesehen ist, welche zum oberen Ende des Reaktionsapparates der Vorbehandlungszone (1) führt und stickoxidhaltige Absorptionssäure in die letztere Zone einlässt.

14. Anlage nach Anspruch 13, dadurch gekennzeichnet dass eine Vorrichtung (83, 80) zum Zusatz von Salpetersäure zur stickoxidhaltigen Absorptionssäure in der Ueberführungsleitung (82, 78) für die letztere Säure vorgesehen ist.

## Revendications

1. Procédé pour la séparation du dioxyde de soufre d'un courant de gaz contenant au moins 5 g d'eau/m³ qui contient le $SO_2$ au moins temporairement en concentration élevée non permise pour le lâcher dans l'atmosphère, pendant la fabrication de l'acide sulfurique selon le procédé aux oxydes d'azote, dans un système approprié de zone réactionnelle pour produire un acide sulfurique concentré contenant plus de 70% en poids de $H_2SO_4$, procédé où le gaz contenant du $SO_2$ (avec une teneur en oxygène appropriée pour la réalisation du procédé aux oxydes d'azote) est conduit, sous une pression suffisante pour que le gaz traverse le système, successivement

0 000 707

(a) dans une zone de prétraitement;
(b) dans une zone de dénitration;
(c) dans une zone de traitement du $SO_2$

dans laquelle il est amené en contact intime avec de l'acide sulfurique étendu traversant cette zone en circuit fermé et ayant une teneur inférieure à 70% en poids de $H_2SO_4$ (acide dilué), où la durée de séjour du gaz contenant $SO_2$ et des oxydes d'azote entre la sortie de la zone de dénitration et l'entrée dans la première tour de la zone d'absorption des oxydes d'azote est maintenue inférieure à 30 secondes pour des concentrations d'au moins 5% en volume de $SO_2$ et d'eau moins 10% en volume d'oxygène dans le gaz d'entrée dans la zone de dénitration, tandis que pour des teneurs en $SO_2$ et en oxygène plus petites dans le gaz d'entrée mentionné, la limite supérieure de la durée de séjour se calcule d'après la formule

$$Z_{max} = \frac{1500}{[SO_2][O_2]}$$

dans laquelle $Z_{max}$ est la durée de séjour en secondes, $[SO_2]$ désigne la teneur en $SO_2$ dans le gaz d'entrée dans la zone de dénitration en % en volume, et $[O_2]$ désigne la teneur en $O_2$ dans la même gaz d'entrée, également en % en volume, et

(d) dans une zone d'absorption des oxydes d'azote, où au moins une partie de l'acide sulfurique contenant des vapeurs nitreuses, sortant de la zone d'absorption, est chauffée indirectement à une température supérieure à 60°C et, en évitant la zone de traitement du $SO_2$, est introduite directement dans la zone de dénitration dans laquelle les oxydes d'azote sont transférés de cet acide dans le courant gazeux, ce qui fait que l'acide pratiquement exempt de vapeurs nitreuses sortant de la zone de dénitration avec une teneur supérieure à 70% en poids de $H_2SO_4$, peut être enlevé du système; et une partie de l'acide cité en dernier circule de nouveau à travers la zone d'absorption et là, extrait par absorption les oxydes d'azote du courant gazeux; où encore

($\alpha$) une partie de l'acide dilué mentionné est prélevé du circuit à travers la zone de traitement du $SO_2$ et, dans la zone de prétraitement, est amené en contact avec le courant gazeux humide contenant le $SO_2$,

($\beta$) une première partie de l'acide dilué pratiquement débarrassé des oxydes d'azote pouvant être cédés dans le courant gazeux, fortement dilué par l'humidité provenant du gaz, sortant de la zone de prétraitement, est ramenée directement dans le circuit de la zone de traitement du $SO_2$ en évitant la zone de dénitration; et

($\gamma$) une autre partie de l'acide dilué sortant de la zone de prétraitement mentionnée est envoyée dans une zone de déshydratation de l'acide dans laquelle l'eau est évaporée de l'acide dilué, après quoi l'acide dilué fortement concentré qui s'est formé est ramené de nouveau dans le circuit de l'acide dilué, ce procédé étant caractérisé par le fait que

($\delta$) dans la zone de prétraitement, un composé azote-oxygène, (tel que défini dans la description) est introduit en quantité telle, que, lors du contact du courant gazeux contenant le $SO_2$ avec l'acide dilué dans cette zone, la teneur du composé azote-oxygène dans celle-ci corresponde toujours au moins à 0,8 g d'azote par mole de $SO_2$ contenu dans le courant gazeux à traiter; mais où la teneur en composé azote-oxygène qui est introduit dans la zone de prétraitement correspond au maximum à 11,2 g d'azote par mole de $SO_2$ du courant gazeux.

2. Procédé selon la revendication 1, caractérisé par le fait que le composé azote-oxygène est amené sous forme d'un acide sulfurique contenant celui-ci, dont la teneur en $H_2SO_4$ est inférieure à 70% en poids.

3. Procédé selon la revendication 2, caractérisé par le fait que l'acide sulfurique est prélevé de la zone de traitement du $SO_2$ et que le composé azote-oxygène lui est ajouté avant son entrée dans la zone de prétraitement.

4. Procédé selon la revendication 1, caractérisé par le fait que l'acide nitrique est introduit dans l'acide dilué arrivant à la zone de prétraitement.

5. Procédé selon la revendication 3 ou 4, caractérisé par le fait que l'acide dilué sortant de la zone (1) de prétraitement est amené dans une zone (7) de déshydratation de l'acide en contact avec les gaz résiduaires sortant des zones (5, 6) d'absorption des oxydes d'azotes, et que l'acide sulfurique résultant est réintroduit directement dans la zone (1) de prétraitement avec l'oxyde d'azote qu'il a absorbé à partir des gaz résiduaires, et avec une teneur en $H_2SO_4$ sensiblement augmentée.

6. Procédé selon la revendication 5, caractérisé par le fait que l'acide dilué sortant de la zone (7) de déshydratation de l'acide coule directement dans la zone (1) de prétraitement par un joint gaz-liquide (77).

7. Procédé selon l'une quelconque des revendications 1 à 6, caractérisé par le fait que la concentration en $H_2SO_4$ de l'acide entrant dans la zone (1) de prétraitement en contact avec le courant gazeux contenant $SO_2$ est maintenue plus faible que la concentration en $H_2SO_4$ de l'acide dans la zone (3, 4) de traitement du $SO_2$.

8. Procédé selon la revendication 1, caractérisé par le fait que le composé azote-oxygène est prélevé sous la forme d'acide d'absorption de la zone (5, 6) d'absorption des oxydes d'azote, et est

14

# 0 000 707

introduit dans la zone (1) de prétraitement, éventuellement en ajoutant de l'acide nitrique.

9. Installation pour la réalistation du procédé décrit dans les revendications 1 à 8, qui comprend successivement: ·

(a) une zone de prétraitement,

(b) une zone de dénitration,

(c) une zone de traitement du SO$_2$, et

(d) une zone d'absorption des oxydes d'azote, avec pour chaque zone au moins un appareil laboratoire gaz-liquide, qui est muni d'un puisard servant pour l'absorption de liquide sortant de l'extrémité inférieure de l'appareil concerné, ainsi que

(e) une conduite pour le courant gazeux qui successivement à une extrémité de la zone de prétraitement entre dans celle-ci et par l'autre extrémité de cette dernière arrive à la zone de dénitration, passe de celle-ci à la zone de traitement du SO$_2$, et passe de cette dernière à la zone. d'absorption des oxydes d'azote puis passe de l'extrémité supérieure de cette dernière à l'extrémité inférieure de la zone de déshydratation de l'acide et finalement passe de l'extremité de la dernière zone à l'air libre.

(f) une conduite de recyclage pour l'acide dilué à travers la zone de traitement de SO$_2$,

(g) une conduite de recyclage pour l'acide dilué à travers la zone de prétraitement et la zone de déshydratation, et finalement

(i) une conduite de recyclage pour l'acide allant du premier puisard de la zone d'absorption des oxydes d'azote, dans le sens du courant gazeux vers l'extrémité supérieure de la zone de dénitration, et depuis le puisard de cette dernière retourne à l'extrémité supérieure du dernier appareil laboratoire de la zone d'absorption des oxydes d'azote, ainsi que

(j) une conduite de compensation qui raccorde le dernier puisard de la zone de traitement de SO$_2$, dans le sens du courant gazeux, cette installation étant caractérisée par le fait qu'une conduite d'arrivée. est prévue pour la substance gazeuse ou liquide contenant le composé azote-oxygène, qui débouche dans un appareil laboratoire de la zone de prétraitement et qu'à celle-ci arrive le composé mentionné en plus du courant gazeux à traiter et de l'acide dilué provenant de la conduite (g) de recylclage.

10. Installation selon la revendication 9, caractérisée par le fait que l'appareil laboratoire de la zone de déshydratation de l'acide est placé au-dessus de celui de la zone de prétraitement et qu'entre les deux, est prévu un joint gaz-liquide, par lequel l'acide dilué sortant de la zone de déshydratation de l'acide peut s'écouler en descendant directement dans la zone de prétraitement, sans que le courant gazeux puisse se mélanger à travers les deux zones.

11. Installation selon l'une des revendications 9 ou 10, caractérisée par le fait qu'une conduite (30) de dérivation est prévue à partir de la conduite de recyclage (f) (33) de l'acide dilué de la zone (3, 4) de traitement du SO$_2$, laquelle conduite de dérivation (30) est montée dans la zone de prétraitement (1), dans la direction du courant d'acide dilué avant l'extrémité supérieure du premier appareil laboratoire (3) dans la direction du courant gazeux de la zone de traitement de SO$_2$, et traverse cette zone (1) dans le même sans que l'acide dilué du circuit selon (g) (73) opposé au courant gazeux traversant la zone (1) de prétraitement de bas en haut.

12. Installation selon la revendication 11, caractérisée par le fait qu'un échangeur de chaleur (34) chauffant l'acide est prévu dans la conduite de recyclage selon (f) (33) et que la conduite (30) de derivation se ramifie dans la direction du courant d'acide dilué en aval de cet échangeur de chaleur (34) avant l'entrée dans le premier appareil laboratoire (3) de la zone de traitement du SO$_2$.

13. Installation selon l'une des revendications 9 ou 10, caractérisée par le fait qu'une conduite (82, 78) de pontage est prévue à partir du puisard (51) du premier appareil laboratoire de la zone (5) d'absorption des oxydes d'azote, dans le sens du courant gazeux, qui conduit à l'extrémité supérieure de l'appareil laboratoire de la zone (1) de prétraitement et introduit l'acide d'absorption contenant les oxydes d'azote dans la dernière zone.

14. Installation selon la revendication 13, caractérisée par le fait qu'un dispositif (83, 80) pour ajouter l'acide nitrique à l'acide d'absorption contenant des oxydes d'azote est prévu dans la conduite de pontage (82, 78) pour ce dernier acide.

## Claims

1. A process for separating SO$_2$ from a stream of gas which contains at least 5 g of water per cubic metre and which contains the SO$_2$, at least intermittently, at a concentration inadmissibly high for discharge into the surrounding atmosphere, in which process sulfuric acid is obtained, by the nitrogen oxide process, in a system of reaction zones suitable for producing a strong sulfuric acid having an H$_2$SO$_4$-content of above 70% by weight, in which system the stream of SO$_2$-containing gas (having an oxygen content sufficiently high for carrying out the nitrogen oxide process) is passed, under an excess pressure adequate for conveying the gas through the system, successively:

(a) through a pretreatment zone;

(b) through a denitration zone;

(c) through an SO$_2$-processing zone in which it is brought into intimate contact with dilute sulfuric acid circulating through this zone and having a content of H$_2$SO$_4$ of less than 70% by weight

15

0 000 707

(dilute acid), the time between emergence of the $SO_2$- and nitrogen-oxide-containing gas from the denitration zone and its entry into the first tower of the nitrogen-oxide-absorption zone, at concentrations of at least 5 vol.% of $SO_2$ and at least 10 vol.% of $O_2$ in the gas entering the denitration zone, being kept shorter than 30 seconds, whilst with lower $SO_2$-contents or lower $O_2$-contents in the said entry gas the upper limit of the time taken being calculated according to the formula

$$z_{max} = \frac{1500}{[SO_2][O_2]}$$

wherein $z_{max}$ is the contact time in seconds, $[SO_2]$ is the content of $SO_2$ in the gas entering the denitration zone in vol.%, and $O_2$ is the content of $O_2$ in the same entering gas, likewise in vol.%; and

(d) through a nitrogen-oxide-absorption zone; at least a portion of the nitrose-containing sulfuric acid flowing from the absorption zone being indirectly heated to a temperature of above 60°C and, by-passing the $SO_2$-processing zone, being passed directly into the denitration zone, in which zone nitrogen oxide is transferred from this acid into the gas stream, in consequence of which virtually nitrose-free acid flowing from the denitration zone and containing above 70% by weight of $H_2SO_4$ can be drawn off from the system, whilst a portion of the last-mentioned acid is recirculated through the absorption zone, where it absorbs nitrogen oxides from the gas stream; whereby in addition:

($\alpha$) a portion of the said dilute acid is removed from circulation through the $SO_2$-processing zone and is brought into contact, in the pretreatment zone, with the moist $SO_2$-containing gas stream;

($\beta$) a first portion of the dilute acid emerging from the pretreatment zone, which is more highly diluted by moisture from the gas and virtually free from nitrogen oxides transferable to the gas stream, is re-introduced, by-passing the denitration zone, directly into the circulation system of the $SO_2$-processing zone;

($\gamma$) a further portion of the dilute acid emerging from the said pretreatment zone is passed into an acid dehydration zone, in which water is evaporated off from the dilute acid, whereupon the more highly concentrated dilute acid is fed back again to the dilute-acid circulation system, characterised in that

($\delta$) a nitrogen-oxygen compound (as defined in the specification) is introduced into the pretreatment zone in such an amount that, on contact of the $SO_2$-containing gas stream with dilute acid in this zone, the content of the nitrogen-oxygen compound therein always corresponding to at least 0.8 g of nitrogen per mol of $SO_2$ contained in the gas stream to be treated, the amount of nitrogen-oxygen compound being introduced into the pretreatment zone corresponding however at most to 11.2 g of nitrogen per mol of $SO_2$ in the gas stream.

2. A process according to Claim 1, wherein the nitrogen-oxygen compound is introduced together with a sulfuric acid, the $H_2SO_4$ content being below 70% by weight.

3. A process according to Claim 2, wherein the sulfuric acid is removed from the $SO_2$-processing zone, and the nitrogen-oxygen compound is added to the acid before its entry into the pretreatment zone.

4. A process according to Claim 1, wherein nitric acid is introduced into the dilute acid flowing into the pretreatment zone.

5. A process according to Claim 3 or 4, wherein dilute acid emerging from the pretreatment zone (1) is brought into contact, in an acid-dehydration zone (7), with the exhaust gases from the nitrogen-oxide absorption zone (5, 6), and the resulting sulfuric acid is re-introduced, with the nitrogen oxide it has absorbed from the exhaust gases and with a somewhat increased $H_2SO_4$-content, directly into the pretreatment zone (1).

6. A process according to Claim 5, wherein the dilute acid from the acid-dehydration zone (7) passes, by way of a gas-flow-preventing liquid lock (77), directly into the pretreatment zone (1).

7. A process according to any one of Claims 1 to 6, wherein the $H_2SO_4$-concentration of the acid coming into contact, in the pretreatment zone (1), with the $SO_2$ containing gas stream is kept lower than the $H_2SO_4$-concentration of the acid in the $SO_2$-processing zone (3, 4).

8. A process according to Claim 1, wherein the nitrogen-oxygen compound is removed in the form of absorption acid from the nitrogen-oxide absorption zone (5, 6), and, optionally, introduced, with the addition of nitric acid, into the pretreatment zone (1).

9. A plant for carrying out the process described in Claims 1 to 8, which plant comprises, in succession:
(a) a pretreatment zone,
(b) a denitration zone,
(c) an $SO_2$-processing zone, and
(d) a nitrogen-oxide absorption zone,
each of said zones having at least one gas-liquid reaction apparatus provided with a sump serving to take up liquid emerging from the lower end of the apparatus concerned, as well as:
(e) a pipe line for the gas stream, which, successively, enters at the one end of the pretreatment zone into this zone, and passes from the other end thereof into the denitration zone, from this to the

16

SO$_2$-processing zone, from this to the nitrogen-oxide absorption zone, then from the upper end of this to the lower end of the acid-dehydration zone, and finally from this zone into the surrounding atmosphere,

(f) a circulation system for dilute acid through the SO$_2$-processing zone,

(g) a circulation system for dilute acid through the pretreatment zone and dehydration zone and, finally,

(i) a circulation system for acid from, taken from, the gas-flow direction, the first sump of the nitrogen-oxide absorption zone to the upper end of the denitration zone, and from the sump thereof back to the upper end of the last reaction apparatus of the nitrogen-oxide absorption zone, as well as

(j) an equalising pipe line connecting the last sump of the pretreatment zone, in the gas-flow direction, with the first sump of the SO$_2$-processing zone, characterised in that there is provided a supply line for gaseous or liquid substance containing a nitrogen-oxygen compound, which supply line discharges into a reaction apparatus of the pretreatment zone and feeds this with the said compound in addition to the gas-stream to be treated and the dilute acid from the circulation system (g).

10. A plant according to Claim 9, wherein the reaction apparatus of the acid-dehydration zone is arranged above that of the pretreatment zone, there being provided between the two a gas-liquid locking means, through which dilute acid from the acid-dehydration zone can flow directly down into the pretreatment zone without the gas streams being able to mix through the two zones.

11. A plant according to either Claim 9 or 10, wherein there is provided a branch line (30) leading from the dilute-acid circulation system (f) (33) of the SO$_2$-processing zone (3, 4), which branch line (30) is introduced (taken in the dilute-acid-flow direction) before (in the gas-flow direction) the upper end of the first reaction apparatus (3) of the SO$_2$-processing zone into the pretreatment zone (1), and flows through this, in the same direction as the dilute acid of the circulation system according to (g) (73) counter to the gas-stream flowing upwards through the pretreatment zone (1).

12. A plant according to Claim 11, wherein a heat exchanger (34) for heating the acid is provided in the circulation system (f) (33), and wherein the branch line (30) branches off in the direction of flow of the dilute acid downstream of this heat exchanger (34) before entry into the first reaction apparatus (3) of the SO$_2$-processing zone.

13. A plant according to either Claim 9 or 10, wherein there is provided a transfer line (82, 78) from the sump (51) of the first reaction apparatus of the nitrogen-oxide absorption zone (5), taken in the gas-flow direction, which line leads to the upper end of the reaction apparatus of the pretreatment zone (1), and admits into this zone nitrogen-oxide-containing absorption acid.

14. A plant according to Claim 13, wherein there is provided a device (83, 80) for the addition of nitric acid to the nitrogen-oxide-containing absorption acid in the transfer line (82, 78) for the last-mentioned acid.

0 000 707

Fig.1

Fig. 2

Fig.3

Fig.4